(19)

**Europäisches Patentamt**
**European Patent Office**
**Office européen des brevets**

(11)  **EP 4 712 028 A1**

(12)  **EUROPEAN PATENT APPLICATION**

(43) Date of publication:
 **18.03.2026  Bulletin 2026/12**

(21) Application number: **24306482.1**

(22) Date of filing: **11.09.2024**

(51) International Patent Classification (IPC):
 **G06T 9/00** (2006.01)      **H04N 19/597** (2014.01)
 **H04N 19/70** (2014.01)

(52) Cooperative Patent Classification (CPC):
 **H04N 19/597; G06T 9/001; H04N 19/70**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(71) Applicant: **InterDigital CE Patent Holdings, SAS
 75017 Paris (FR)**

(72) Inventors:
 • **BHULLAR, Gurdeep
  MONTREAL, H3C4C9 (CA)**
 • **MOCQUARD, Olivier
  35000 RENNES (FR)**
 • **HAMZA, Ahmed
  COQUITLAM, V3J 3X5 (CA)**

(74) Representative: **Interdigital
 Immeuble ZEN 2
 845 A, avenue des Champs Blancs
 35510 Cesson-Sévigné (FR)**

(54)  **HIGH-LEVEL SYNTAX FOR MESH CODING**

(57)  Systems and methods are described for encoding and decoding of 3D volumetric data. Volumetric data is encoded and/or decoded using a syntax that allows for different codec types, such as a point-cloud-based codec type (e.g.. V-PCC), a mesh-based codec type (e.g. V-DMC), and a depth-image-based codec type (e.g. MIV). Example encoding and decoding techniques improve bitrates by allowing for syntax functions that are specific to different codec types, such as syntax functions related to atlas coding, to be tailored to signal only parameters that are relevant to the corresponding codec type that is is used for the volumetric coding.

FIG. 9

**Description**

**BACKGROUND**

The present disclosure relates to systems and method for encoding and decoding (collectively, "coding") of 3D volumetric data.

Conventional immersive video allows a user to experience a scene while looking around in all different directions. The user has the ability to change their viewing direction (e.g. the orientation of their head, when the user is viewing through a head-mounted display), and the correct view is displayed to the user based on that viewing direction. Because the viewing direction can be described by three parameters (such as altitude, azimuth, and roll angles), video that is adaptive to a user's selection of viewing direction is referred to as a three degree of freedom (3DoF) experience. A 3DoF experience, however, does not provide for motion parallax. That is, the viewing experience does not adapt to changes in the user's viewing position, as opposed to their viewing direction. Such a limitation provides for a less immersive experience, and it can also contribute to user discomfort during the viewing experience.

To address such issues, efforts are being made to develop a six degree of freedom (6DoF) experience that accommodates not only the three dimensions of a user's viewing direction but also the three dimensions (x, y, z) of the user's motion in physical space. Some of these efforts involve the creation of standardized video encoding and decoding systems and method to efficiently convey the data needed to provide a 6DoF experience. One such effort is referred to as visual volumetric video-based coding (V3C). V3C provides a framework for the coding of 6DoF experiences. However, the current V3C framework is developed primarily around volumetric coding using point cloud geometries, particularly using the V-PCC system of video based point cloud compression. Some accommodation is also made in V3C for the use of other volumetric encoding techniques, such as MPEG immersive video (MIV). However, the encoding of volumetric experiences using V3C is not optimized when coding types other than V-PCC are used.

**SUMMARY**

Systems and methods are described for encoding and decoding of 3D volumetric data. Volumetric data is encoded and/or decoded using a syntax that allows for different codec types, such as a point-cloud-based codec type (e.g.. V-PCC), a mesh-based codec type (e.g. V-DMC), and a depth-image-based codec type (e.g. MIV). Example encoding and decoding techniques improve bitrates by allowing for syntax functions that are specific to different codec types, such as syntax functions related to atlas coding, to be tailored to signal only parameters that are relevant to the corresponding codec type that is is used for the volumetric coding.

A mesh decoding method according to some embodiments comprises: decoding mesh-based 3D volumetric coding data; wherein decoding the mesh-based 3D volumetric coding data comprises decoding an atlas for the mesh-based 3D volumetric coding, the atlas having an atlas type; wherein decoding the atlas includes: decoding a first syntax function from a sequence parameter set of the atlas; wherein the atlas type is associated with mesh-based coding, and decoding the first syntax function comprises decoding, from the sequence parameter set, a first set of parameters associated with mesh-based coding.

A mesh decoding apparatus according to some embodiments comprises one or more processors configured to perform at least: decoding mesh-based 3D volumetric coding data; wherein decoding the mesh-based 3D volumetric coding data comprises decoding an atlas for the mesh-based 3D volumetric coding, the atlas having an atlas type; wherein decoding the atlas includes: decoding a first syntax function from a sequence parameter set of the atlas; wherein the atlas type is associated with mesh-based coding, and decoding the first syntax function comprises decoding, from the sequence parameter set, a first set of parameters associated with mesh-based coding.

In some embodiments, decoding the atlas further includes: decoding a second syntax function from an atlas frame parameter set; wherein the atlas type is associated with mesh-based coding, and decoding the second syntax function comprises decoding, from the atlas frame parameter set, a second set of parameters associated with mesh-based coding.

In some embodiments, the atlas type is associated with mesh-based coding, and the following parameter is not coded in the sequence parameter set: afps_raw_3d_offset_bit_count_explicit_mode_flag.

In some embodiments, the first set of parameters for the atlas type associated with mesh-based coding include one or more of the following: SubdivisionIterationCount, LiftingQPs[0], LiftingQPs[1], LiftingQPs[2], InterpolateDisplacementNormals, AddReconstructedNormals, DisplacementReversePacking, WidthDispVideo, or HeightDispVideo.

In some embodiments, the atlas type is associated with mesh-based coding, and one or more of the following parameters is not coded in the sequence parameter set:

```
asps_use_eight_orientations_flag, asps_extended_projection_enabled_flag,
asps_max_number_projections_minus1,
```

```
asps_normal_axis_limits_quantization_enabled_flag,
asps_normal_axis_max_delta_value_enabled_flag,
asps_patch_precedence_order_flag, asps_log2_patch_packing_block_size,
asps_patch_size_quantizer_present_flag, asps_map_count_minusl,
asps_pixel_deinterleaving_enabled_flag, asps_map_pixel_deinterleaving_flag,
asps_raw_patch_enabled_flag, asps_eom_patch_enabled_flag,
asps_eom_fix_bit_count_minusl,asps_auxiliary_video_enabled_flag, or
asps_plr_enabled_flag.
```

A mesh encoding method according to some embodiments comprises: encoding mesh-based 3D volumetric coding data; wherein encoding the mesh-based 3D volumetric coding data comprises encoding an atlas for the mesh-based 3D volumetric coding, the atlas having an atlas type; wherein encoding the atlas includes: encoding a first syntax function in a sequence parameter set of the atlas; wherein the atlas type is associated with mesh-based coding, and encoding the first syntax function comprises encoding, in the sequence parameter set, a first set of parameters associated with mesh-based coding.

A mesh encoding apparatus according to some embodiments comprises one or more processors configured to perform at least: encoding mesh-based 3D volumetric coding data; wherein encoding the mesh-based 3D volumetric coding data comprises encoding an atlas for the mesh-based 3D volumetric coding, the atlas having an atlas type; wherein encoding the atlas includes: encoding a first syntax function in a sequence parameter set of the atlas; wherein the atlas type is associated with mesh-based coding, and encoding the first syntax function comprises encoding, in the sequence parameter set, a first set of parameters associated with mesh-based coding.

In some embodiments, encoding the atlas further includes: encoding a second syntax function in an atlas frame parameter set; wherein the atlas type is associated with mesh-based coding, and encoding the second syntax function comprises encoding, in the atlas frame parameter set, a second set of parameters associated with mesh-based coding.

In some embodiments, the atlas type is associated with mesh-based coding, and the following parameter is not coded in the sequence parameter set: afps_raw_3d_offset_bit_count_explicit_mode_flag.

In some embodiments, the first set of parameters for the atlas type associated with mesh-based coding include one or more of the following: SubdivisionIterationCount, LiftingQPs[0], LiftingQPs[1], LiftingQPs[2], InterpolateDisplacementNormals, AddReconstructedNormals, DisplacementReversePacking, WidthDispVideo, or HeightDispVideo.

In some embodiments, the atlas type is associated with mesh-based coding, and one or more of the following parameters is not coded in the sequence parameter set: asps_use_eight_orientations_flag, asps_extended_projection_enabled_flag, asps_max_number_projections_minusl, asps_normal_axis_limits_quantization_enabled_flag, asps_normal_axis_max_delta_value_enabled_flag, asps_patch_precedence_order_flag, asps_log2_patch_packing_block_size, asps_patch_size_quantizer_present_flag, asps_map_count_minusl, asps_pixel_deinterleaving_enabled_flag, asps_map_pixel_deinterleaving_flag, asps_raw_patch_enabled_flag, asps_eom_patch_enabled_flag, asps_eom_fix_bit_count_minusl,asps_auxiliary_video_enabled_flag, or asps_plr_enabled_flag.

Some embodiments include a bitstream encoded using any of the encoding methods described herein.

Some embodiments include a computer-readable medium storing a bitstream encoded using any of the methods described herein.

Some embodiments include a computer-readable medium (e.g. a non-transitory medium) storing instructions operative, when executed on one or more processors, to perform any of the methods described herein.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

## BRIEF DESCRIPTION OF THE DRAWINGS

FIG. 1 is a functional block diagram illustrating an intra frame encoding process.
FIG. 2 is a functional block diagram illustrating an inter frame encoding process.
FIG. 3 is a functional block diagram illustrating an intra frame decoding process.
FIG. 4 is a functional block diagram illustrating an inter frame decoding process.

FIGs. 5A-5C illustrate an example relationship between the nal_unit_type parameter and the corresponding semantics as used in V3C.

FIGs. 6A-6B illustrate an overview of an example V3C bitstream structure.

FIG. 7 illustrates an example atlas NAL structure.

FIG. 8 is a block diagram of an example of a system in which various aspects and embodiments are implemented.

FIG. 9 is a flow diagram of a decoding method according to some embodiments.

FIG. 10 is a flow diagram of an encoding method according to some embodiments.

**DETAILED DESCRIPTION**

**Overview of example embodiments.**

Example embodiments provide a generalized high-level syntax for atlas bitstreams. Example embodiments use a generic and flexible syntax which can be further extended to be used for different 3D content compression schemes such as V-PCC, V-DMC and future extensions. Further embodiments reduce the bitstream size needed to store atlas data depending on the type of data transmitted. Types of atlases may include V-PCC, MIV and V-DMC. Example embodiments reduce the bitstream size for the three codecs.

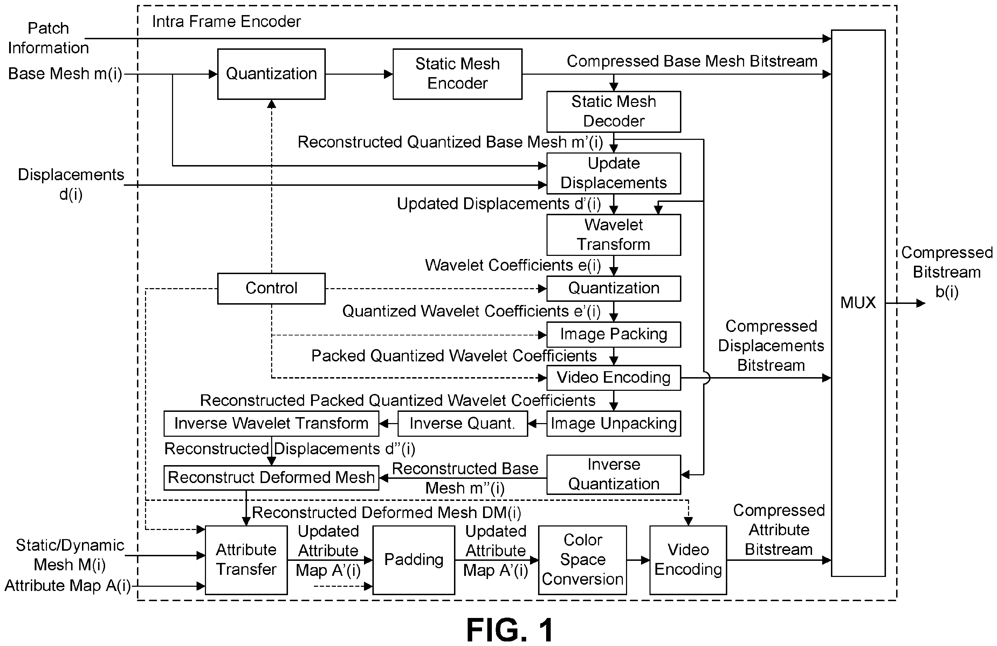

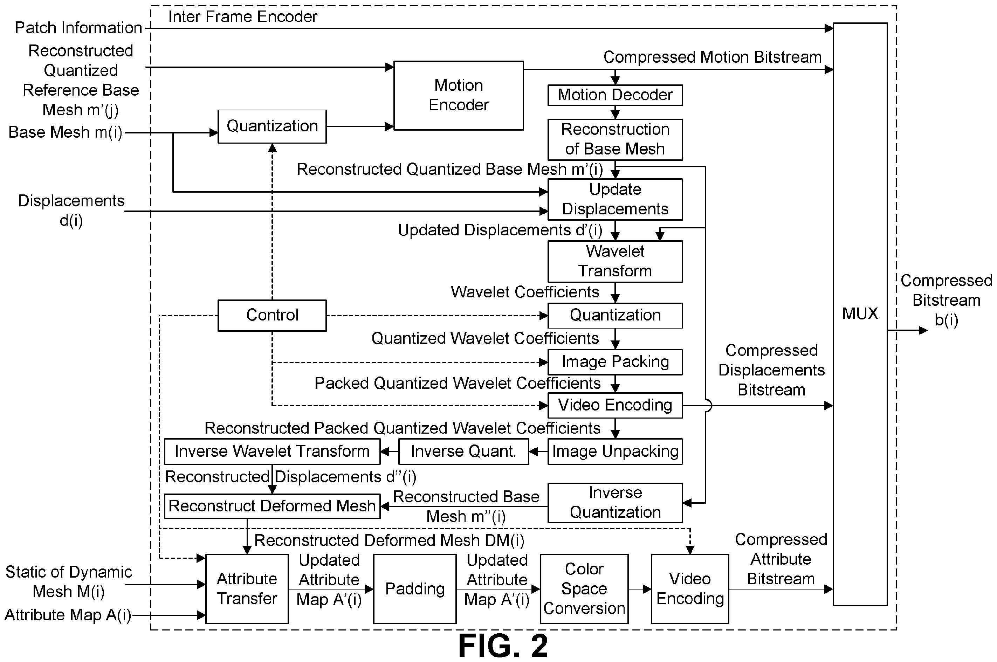

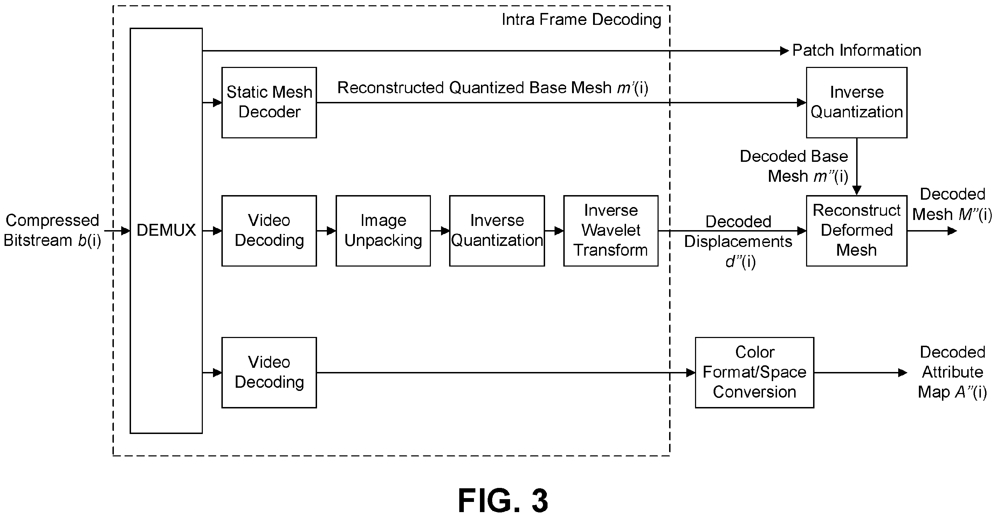

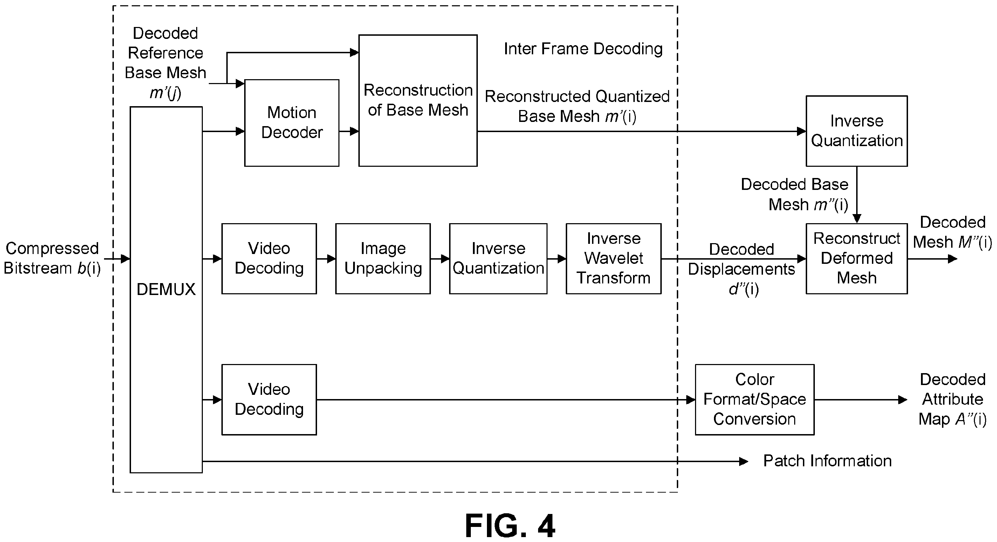

One known coding system for dynamic mesh models, such as the MPEG V-Mesh Test Model, is described in K. Mammou, J. Kim, A. Tourapis and D. Podborski, "m59281 - [V-CG] Apple's Dynamic Mesh Coding CfP Response," Apple Inc, 2022. An overview of such an example process is provided in FIGs. 1-4. FIG. 1 illustrates an intra frame encoding process. FIG. 2 illustrates an inter frame encoding process. FIG. 3 illustrates an intra frame decoding process. FIG. 4 illustrates an inter frame decoding process.

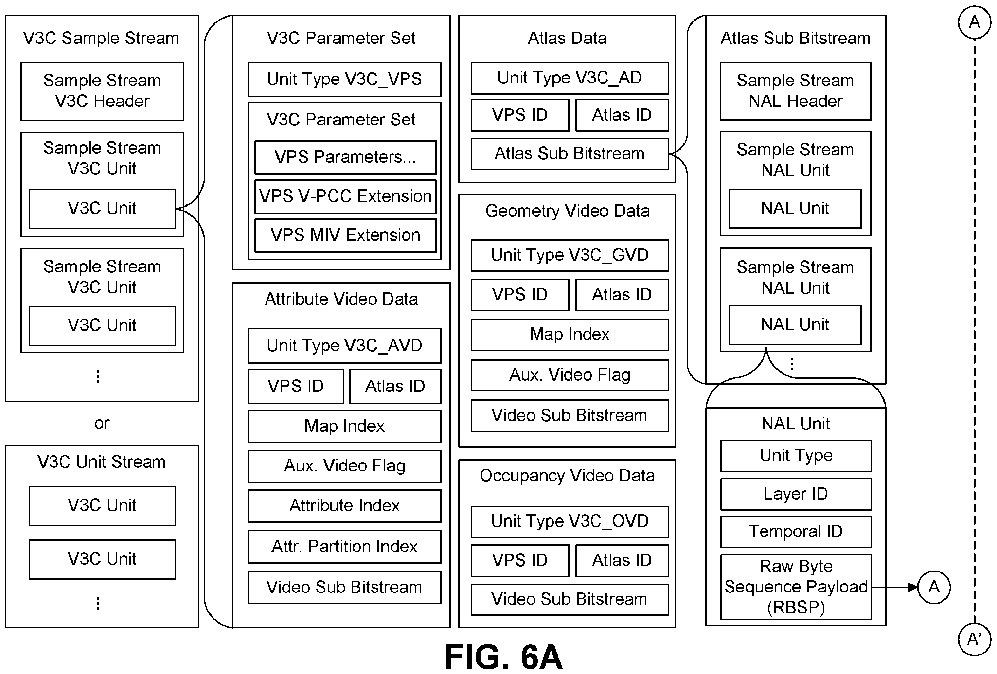

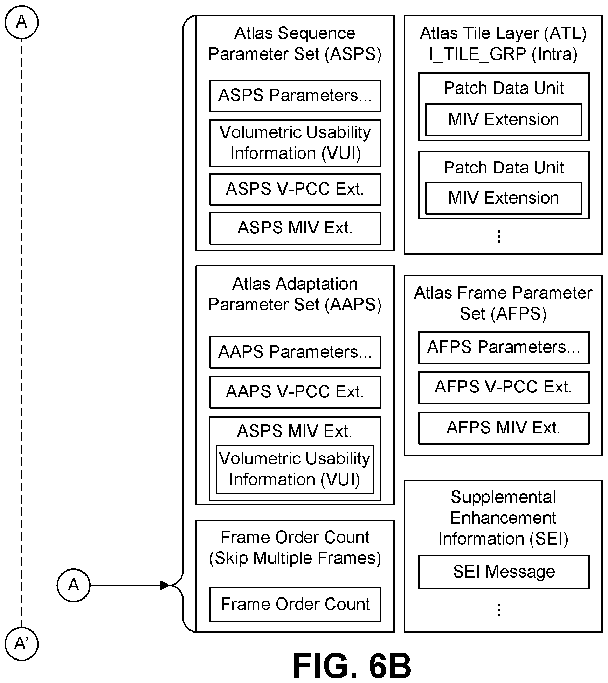

An overview of an example V3C bitstream structure is shown in FIG. 6. The bitstream structure is described in, for example, Boyce, J. M. et al., "MPEG Immersive Video Coding Standard," Proc. IEEE 109 (9), 1521-1536. doi:10.1109/jproc.2021.3062590 (2021).

Currently, the V-Mesh test model proposes a motion detection stage where two variants of a mesh are candidates for a frame: the original base mesh $M'_s(i)$ (see FIGs. 1 and 3 for the static path), or a base mesh using the topology of the previous frame $M'_m(i)$ (see FIGs. 2 and 4 for the motion path). In the later case, some encoding of the vertex motion is used, and the topology is skipped since the topology from the previous frame is used.

Embodiments of the present disclosure are described with particular reference to the visual volumetric video-based coding (V3C) bitstream. Some such embodiments result in an improvement of the V3C bitstream to reduce the size of the data needed to be transmitted to decode a bitstream, such as a V-DMC (video-based dynamic mesh coding) bitstream, an MIV (MPEG Immersive video) bitstream, and/or a V-PCC (Video-based Point Cloud Compression) bitstream. The inventive concepts described herein are not however limited to use in a V3C bitstream.

Example embodiments of the present disclosure introduces a new syntax definition to describe an atlas sub-bitstream, such as a sub-bitstream in V3C. The example atlas sub-bitstream is aimed to be flexible. The flexibility in the atlas sub-bitstream allows for the introduction of any 3D content such as point cloud, mesh, or 3DoF+ volumes to be described using the V3C compression scheme.

Some embodiments include one or more of the following features.

In some embodiments, the syntax of an atlas sample stream is configured to allow for different types of data that can be carried, such as V-PCC data, V-DMC data, and/or MIV data. In the current V3C syntax, the atlas is designed to store V-PCC data, and some data stored in the atlas is mandatory but may not be useful to other codecs that use a V3C atlas (such as MIV and V-DMC). Example embodiments provide coding systems and method that can be more efficiently used with various different codecs without requiring the unnecessary inclusion of mandatory data.

In some embodiments, coding systems and methods are provided that make use of a syntax in which a type of data carried by the bitstream is indicated in a video parameter set (VPS). The bitstream in such embodiments may be a V3C bitstream.

In some embodiments, coding systems and methods are provided in which an atlas tile type is not encoded explicitly but rather is deduced implicitly on the decoder side by extracting this information from the atlas sub-bitstream NAL (network abstraction layer) unit type (i.e. nal_unit type) stored in a NAL unit header i.e. nal_unit_header(). Such embodiments reduce the amount of data transmitted to represent an Atlas V3C sample stream, for example by removing the atlas tile type parameter (ath_type) from the atlas tile_header.

Example embodiments provide methods and apparatus using an atlas sample stream syntax that contains the atlas raw byte sequence payloads (RBSP), such as those defined in section "8.3.6 Raw byte sequence payloads, trailing bits, and byte alignment syntax" and section "8.3.7 Atlas tile data unit syntax". as described in the text of ISO/IEC FDIS 23090-5 2nd Edition Visual volumetric video-based coding (V3C) and video-based point cloud compression (V-PCC), ISO/IEC JTC 1/SC 29/WG 7, 23090-5:2023(E), MDS22483_WG07_N00553, MDS22483, January 2023.

Example embodiments maker use of an atlas with greater flexibility to be able to carry various type of data (such as V-PCC, MIV or V-DMC) without requiring the inclusion of date that is not used for each codec. Such embodiments help to reduce the bitstream sizes and facilitate the parsing processes.

As compared to existing V3C, example embodiments include differences in one or more of the following syntax structures.

- Atlas sequence parameter set RBSP syntax (8.3.6.1)
- Atlas frame parameter set RBSP syntax (8.3.6.2)
- Atlas tile header syntax (8.3.6.11)
- General atlas tile data unit syntax (8.3.7.1)

In general, these identified sections describe the atlas syntax that is used to carry V-PCC and/or MIV data. However, much of that data is not used in the case of volumetric data coded according to a different scheme, such as V-DMC for instance.

Example embodiments provide a syntax for an atlas sample stream that is more flexible and allows for transporting data of different types without unnecessary overhead. In a syntax according to example embodiments, all the data that are specific to one special codec (V-PCC, MIV or V-DCM) are provided in a corresponding atlas extension. Extensions for V-PCC, MIV, and V-DMC data as used in some embodiments are described herein.

The following tables show syntax tables used in some example embodiments.

**Table 1. General atlas sequence parameter set RBSP syntax.**

| atlas_sequence_parameter_set_rbsp( ) { | | **Descriptor** |
|---|---|---|
| **asps_atlas_sequence_parameter_set_id** | | ue(v) |
| **asps_frame_width** | | ue(v) |
| **asps_frame_height** | | ue(v) |
| **asps_geometry_3d_bit_depth_minus1** | | u(5) |
| **asps_geometry_2d_bit_depth_minus1** | | u(5) |
| **asps_log2_max_atlas_frame_order_cnt_lsb_minus4** | | ue(v) |
| **asps_max_dec_atlas_frame_buffering_minus1** | | ue(v) |
| **asps_long_term_ref_atlas_frames_flag** | | u(1) |
| **asps_num_ref_atlas_frame_lists_in_asps** | | ue(v) |
| for( i = 0; i < asps_num_ref_atlas_frame_lists_in_asps; i++ ) | | |
|   ref_list_struct( i ) | | |
| **asps_vui_parameters_present_ftag** | | u(1) |
| if( asps _vui_parameters_present_flag ) | | |
|   vui_parameters( ) | | |
| **asps_extension_present_flag** | | u(1) |
| if( asps_extension_present_flag ) { | | |
|   **asps_vpcc_extension_present_flag** | | u(1) |
|   **asps_miv_extension_present_flag** | | u(1) |
|   **asps_vdmc_extension_present_flag** | † | u(1) |
|   **asps_extension_5bits** | † | u(5) |
| } | | |
| if( asps_vpcc_extension_present_flag ) | | |
|   asps_vpcc_extension( ) /* Specified in Annex H */ | | |
| if( asps_miv_extension_present_flag ) | | |
|   asps_miv_extension( ) /* Specified in ISO/IEC 23090-12 */ | | |

(continued)

| | | |
|---|---|---|
| if( asps_vdmc_extension_present_flag ) | † | |
| asps_vdmc_extension( ) | † | |
| if( asps_extension_5bits ) | † | |
| while( more_rbsp_data( ) ) | | |
| **asps_extension_data_flag** | | u(1) |
| rbsp_trailing_bits( ) | | |
| } | | |

Features marked with a dagger (†) are features that are added or revised in example embodiments as compared to the general atlas sequence parameter set RBSP syntax (V3C Section 8.3.6.1.1).

As reflected in Table 1, a mesh decoding method according to some embodiments includes: decoding mesh-based 3D volumetric coding data, wherein decoding the mesh-based 3D volumetric coding data comprises decoding an atlas for the mesh-based 3D volumetric coding. Decoding the atlas includes decoding first atlas type information from a sequence parameter set of the atlas. In response to a determination that the first atlas type information identifies an atlas type associated with mesh-based coding, a first set of parameters is decoded from the sequence parameter set for the atlas type associated with mesh-based coding.

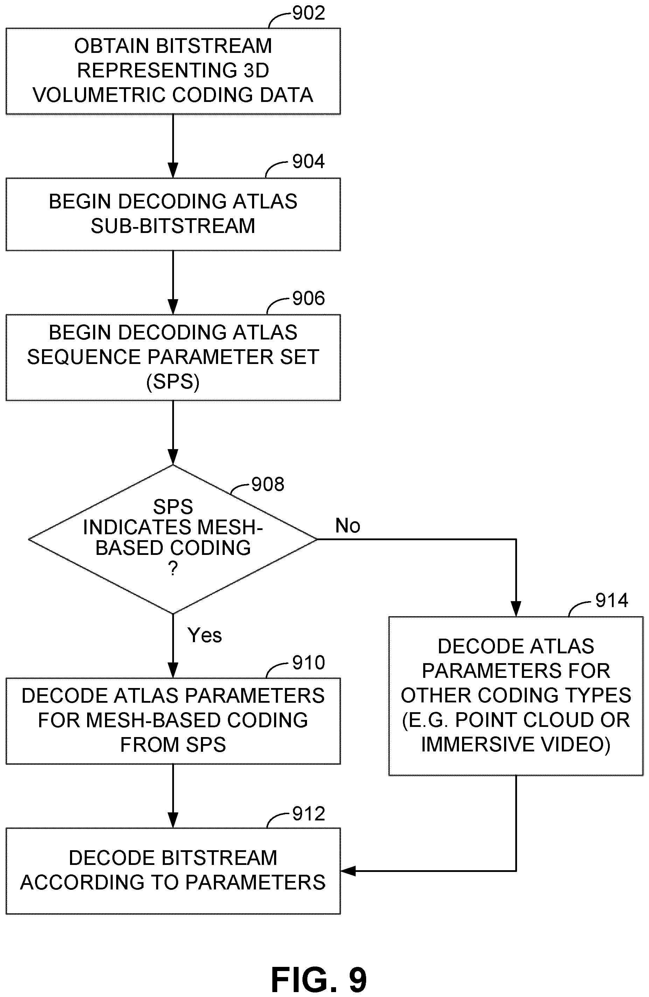

One such mesh decoding method is illustrated in FIG. 9. At 902, a bitstream is obtained that represents 3D volumetric coding data. The bitstream includes an atlas sub-bitstream, and decoding of the atlas sub-bitstream begins at 904. The decoding of the atlas sub-bitstream includes the decoding of an atlas sequence parameter set (SPS), which begins at 906. Within the SPS, first atlas type information is decoded. A determination is made at 908 of whether at least the first atlas type information in the SPS identifies an atlas type associated with mesh-based coding. If so, at 910, a first set of parameters is decoded from the sequence parameter set for the atlas type associated with mesh-based coding. The bitstream may then be decoded according to those parameters at 912. If the atlas type information in the SPS does not identify an atlas type associated with mesh-based coding, then parameters associated with different atlas types may be decoded from the SPS at 914, such as parameters associated with point cloud coding or immersive video coding.

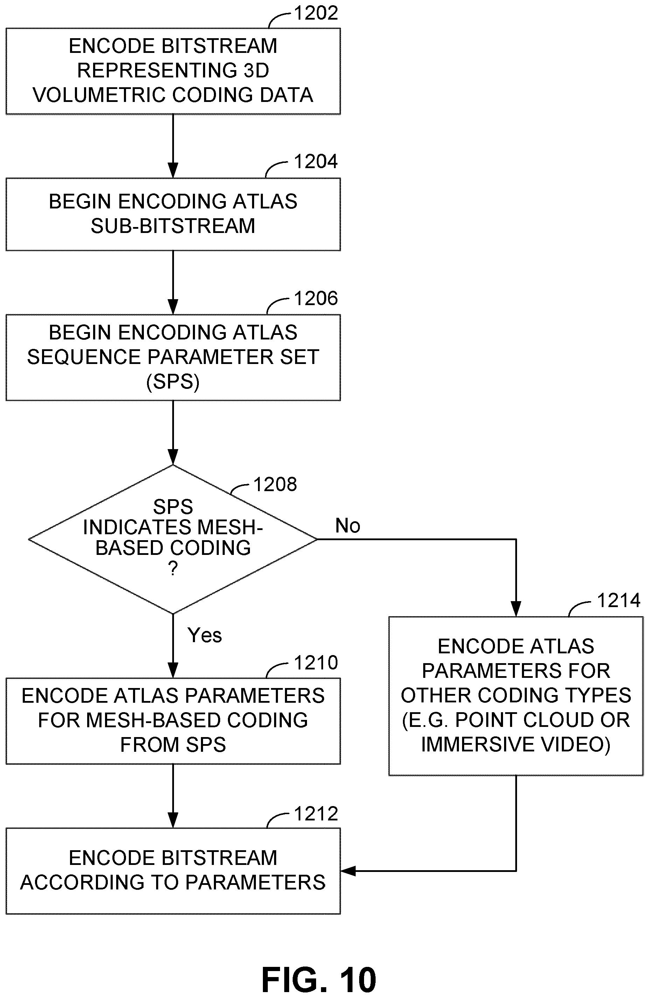

An example of a corresponding encoding method is illustrated in FIG. 10. At 1202, encoding begins for a bitstream that represents 3D volumetric coding data. The bitstream includes an atlas sub-bitstream, and encoding of the atlas sub-bitstream begins at 1204. The encoding of the atlas sub-bitstream includes the encoding of an atlas sequence parameter set (SPS), which begins at 1206. Within the SPS, first atlas type information is encoded. A determination is made at 1208 of whether at least the first atlas type information in the SPS identifies an atlas type associated with mesh-based coding. If so, at 1210, a first set of parameters is encoded in the sequence parameter set for the atlas type associated with mesh-based coding. The bitstream may then be encoded according to those parameters at 1212. If the atlas type information in the SPS does not identify an atlas type associated with mesh-based coding, then parameters associated with different atlas types may be encoded from the SPS at 1214, such as parameters associated with point cloud coding or immersive video coding.

In some such embodiments, the first atlas type information includes a plurality of flags, each flag being associated with a respective atlas type, a first one of the flags being associated with mesh-based coding and having a value indicating that the atlas type is associated with mesh-based coding.

Table 2 illustrates an example of a syntax element used to code parameters associated with V-PCC in an atlas sequence parameter set according to some embodiments. In some embodiments, in response to the determination that the atlas type is associated with mesh-based coding, some or all of the parameters shown in Table 2 are not coded in the sequence parameter set.

**Table 2. Atlas sequence parameter set V-PCC extension syntax updated to include specific** V-PCC data

| asps_vpcc_extension( ) { | | **Descriptor** |
|---|---|---|
| **asps_vpcc_remove_duplicate_point_enabled_flag** | | u(1) |
| if( asps_pixel_deinterleaving_enabled_flag \|\| asps_plr_enabled_flag ) | | |
| **asps_vpcc_surface_thickness_minus1** | | ue(v) |
| **asps_use_eight_orientations_flag** | † | u(1) |
| **asps_extended_projection_enabled_flag** | † | u(1) |
| if( asps_extended_projection_enabled_flag ) | † | |

(continued)

| | | |
|---|---|---|
| asps_mag_number_projections_minus1 | † | ue(v) |
| asps_normal_axis_limits_quantization_enabled_flag | † | u(1) |
| asps_normal_axis_max_delta_value_enabled_flag | † | u(1) |
| asps_patch_precedence_order_flag | † | u(1) |
| asps_log2_patch_packing_block_size | † | u(3) |
| asps_patch_size_quantizer_present_flag | † | u(1) |
| asps_map_count_minus1 | † | u(4) |
| asps_pixel_deinterleaving_enabled_flag | † | u(1) |
| if( asps_pixel_deinterleaving_enabled_flag ) | † | |
| for( j = 0; j <= asps _map_count_minus1; j++ ) | † | |
| asps_map_pixel_deinterleaving_flag[ j ] | † | u(1) |
| asps_raw_patch_enabled_flag | † | u(1) |
| asps_eom_patch_enabled_flag | † | u(1) |
| if( asps_eom_patch_enabled_flag && asps_map_count_minus1 == 0 ) | † | |
| asps_eom_fix_bit_count_minus1 | † | u(4) |
| if( asps_raw_patch_enabled_flag || asps_eom_patch_enabled_flag ) | † | |
| asps_auxiliary_video_enabled_flag | † | u(1) |
| asps_plr_enabled_flag | † | u(1) |
| if( asps_plr_enabled_flag ) | † | |
| asps_plr_information( asps_map_count_minus1 ) | † | |
| } | | |

Features marked with a dagger (†) are features that are added or revised in example embodiments as compared to the ASPS V-PCC extension syntax (V3C Section H.8.3.6.1.3).

Table 3 illustrates an example of a syntax element used to code parameters associated with V-DMC in an atlas sequence parameter set (ASPS) according to some embodiments. Such a syntax element may be used to convey a set of parameters for an atlas type associated with mesh-based coding.

**Table 3. Example ASPS V-DMC extension syntax.**

| asps_vdmc_extension( ) { | Descriptor |
|---|---|
| SubdivisionIterationCount | u(4) |
| LiftingQPs[0] | u(8) |
| LiftingQPs[1] | u(8) |
| LiftingQPs[2] | u(8) |
| InterpolateDisplacementNormals | u(1) |
| AddReconstructedNormals | u(1) |
| DisplacementReversePacking | u(1) |
| WidthDispVideo | u(16) |
| HeightDispVideo | u(16) |
| } | |

Table 4 illustrates an example of a syntax element used to code parameters in an atlas frame parameter set according to some embodiments.

**Table 4. General atlas frame parameter set RBSP syntax.**

| atlas_frame_parameter_set_rbsp( ) { | | Descriptor |
|---|---|---|
| **afps_atlas_frame_parameter_set_id** | | ue(v) |
| **afps_atlas_sequence_parameter_set_id** | | ue(v) |
| atlas_frame_tile_information( ) | | |
| **afps_output_flag_present_flag** | | u(1) |
| **afps_num_ref_idx_default_active_minus1** | | ue(v) |
| **afps_additional_lt_afoc_lsb_len** | | ue(v) |
| **afps_lod_mode_enabled_flag** | | u(1) |
| **afps_extension_present_flag** | | u(1) |
| if( afps_extension_present_flag ) { | | |
| **afps_vpcc_extension_present_flag** | † | u(1) |
| **afps_miv_extension_present_flag** | | u(1) |
| **afps_vdmc_extension_present_flag** | † | u(1) |
| **afps_extension_5bits** | † | u(5) |
| } | | |
| if( afps_vpcc_extension_present_flag ) | † | |
| afps_vpcc_extension( ) | † | |
| if( afps_miv_extension_present_flag ) | | |
| afps_miv_extension( ) /* Specified in ISO/IEC 23090-12 */ | | |
| if( afps_vdmc_extension_present_flag ) | † | |
| afps_vdmc_extension( ) | † | |
| if( afps_extension_5bits ) | † | |
| while( more_rbsp_data( ) ) | | |
| **afps_extension_data_flag** | | u(1) |
| rbsp_trailing_bits( ) | | |
| } | | |

Features marked with a dagger (†) are features that are added or revised in example embodiments as compared to the general atlas frame parameter set RBSP syntax (V3C Section 8.3.6.2.1).

As reflected in the syntax of Table 4, some methods include decoding second atlas type information from an atlas frame parameter set. In response to a determination that the second atlas type information identifies an atlas type associated with mesh-based coding, a second set of parameters for the atlas type associated with mesh-based coding is decoded from the atlas frame parameter set.

Different frame level atlas information may be useful in different 3D content coding content schemes such as V-PCC and V-DMC. To increase the flexibility of the atlas frame sequence parameter set, example embodiments of a 3D content specific extension syntax are described in Table 5 and Table 6. Any syntax elements within the afps_vpcc_extension ( ) or afps_vdmc_extension () may be used to signal information which can be referred by NAL units of one or more coded atlas frame for point cloud or meshes respectively.

**Table 5. AFPS V-PCC extension syntax.**

| afps_vpcc_extension( ) { | Descriptor |
|---|---|
| **afps_raw_3d_offset_bit_count_explicit_mode_flag** | u(1) |
| } | |

As reflected in Table 5, in some embodiments, in response to the determination that the atlas type is associated with mesh-based coding, the following parameter is not coded in the sequence parameter set: afps_raw_3d_offset_bit_count_explicit_mode_flag.

**Table 6. AFPS V-DMC extension syntax.**

| afps_vdmc_extension( ) { | Descriptor |
|---|---|
| } | |

Some embodiments use an atlas tile header syntax and/or an atlas tile data unit syntax according to previously known techniques.

In some embodiments, a V3C encoder/decoder may signal/decode the data specific to an V3C-based application type (i.e. V-PCC, MIV, V-DMC and etc.) based on the value of the ptl_profile toolset idc syntax element. Different values for ptl_profile toolset idc may be defined depending on the V3C-based application type. The value of ptl_profile toolset_idc may be used to differentiate whether the V3C bitstream is a V-PCC, MIV, V-DMC or any other bitstream. The parameter ptl_profile toolset_idc may be signaled in the V3C parameter set or through external means. The parameter indicates the application type and determine the constraints on V3C bitstream as well as atlas bitstream. When signaled in the V3C parameter set, "ptl_profile toolset_idc" may be one of the parameters in the syntax structure "profile_tier_level()".

As an example, Table 7 provides syntax structure for Atlas Sequence Parameter Set with some syntax elements (indicated with a dagger, †) are constrained according to the values of ptl_profile toolset idc.

**Table 7. Example of ASPS generalization with ptl_profile toolset_idc**

| atlas_sequence_parameter_set_rbsp( ) { | | Descriptor |
|---|---|---|
| asps_atlas_sequence_parameter_set_id | | ue(v) |
| asps_frame_width | | ue(v) |
| asps_frame_height | | ue(v) |
| asps_geometry_3d_bit_depth_minus1 | | u(5) |
| asps_geometry_2d_bit_depth_minus1 | | u(5) |
| asps _log2_max_atlas_frame_order_cnt_lsb_minus4 | | ue(v) |
| asps_max_dec_atlas_frame_buffering_minus1 | | ue(v) |
| asps_long_term_ref_atlas_frames_flag | | u(1) |
| asps_num_ref_atlas_frame_lists_in_asps | | ue(v) |
| for( i = 0; i < asps_num_ref_atlas_frame_lists_in_asps; i++ ) | | |
| ref_list_struct( i ) | | |
| if( ptl_profile_toolset_idc == #PROFILE_TOOLSET_IDC for V-PCC/MIV ) { | † | |
| asps_use_eight_orientations_flag | † | u(1) |
| asps_extended_projection_enabled_flag | † | u(1) |
| if( asps_extended_projection_enabled_flag ) | † | |
| asps_max_number_projections_minus1 | † | ue(v) |
| asps_normal_axis_limits_quantization_enabled_flag | † | u(1) |
| asps_normal_axis_max_delta_value_enabled_flag | † | u(1) |
| asps_patch_precedence_order_flag | † | u(1) |
| asps_log2_patch_packing_block_size | † | u(3) |
| asps_patch_size_quantizer_present_flag | † | u(1) |
| asps_map_count_minus1 | † | u(4) |
| asps_pixel_deinterleaving_enabled_flag | † | u(1) |
| if( asps_pixel_deinterleaving_enabled_flag ) | † | |

(continued)

| | | |
|---|---|---|
| for( j = 0; j <= asps _map_count_minus1; j++ ) | † | |
| **asps_map_pixel_deinterleaving_flag[** j **]** | † | u(1) |
| **asps_raw_patch_enabled_flag** | † | u(1) |
| **asps_eom_patch_enabled_flag** | † | u(1) |
| if( asps_eom_patch_enabled_flag && asps_map_count_minus1 == 0 ) | † | |
| **asps_eom_fix_bit_count_minus1** | † | u(4) |
| if( asps_raw_patch_enabled_flag \|\| asps_eom_patch_enabled_flag ) | † | |
| **asps_auxiliary_video_enabled_flag** | † | u(1) |
| **asps_plr_enabled_flag** | † | u(1) |
| if( asps_plr_enabled_flag ) | † | |
| asps_plr_information( asps_map_count_minus1 ) | † | |
| } else if( ptl_profile_toolset_idc == #VDMC TOOLSET IDC) { | † | |
| VDMC-SPECIFIC ASPS SYNTAX ELEMENTS | † | |
| } | † | |
| **asps_vui_parameters_present_flag** | | u(1) |
| if( asps_vui_parameters_present_flag ) | | |
| vui_parameters( ) | | |
| **asps_extension_present_flag** | | u(1) |
| if( asps_extension_present_flag ) { | | |
| **asps_vpcc_extension_present_flag** | | u(1) |
| **asps_miv_extension_present_flag** | | u(1) |
| **asps_extension_6bits** | | u(1) |
| } | | |
| if( asps_vpcc_extension_present_flag ) | | |
| asps_vpcc_extension( ) /* Specified in Annex H */ | | |
| if( asps_miv_extension_present_flag ) | | |
| asps_miv_extension( ) /* Specified in ISO/IEC 23090-12 */ | | |
| if( asps_extension_6bits ) | | |
| while( more_rbsp_data( ) ) | | |
| **asps_extension_data_flag** | | u(1) |
| rbsp_trailing_bits( ) | | |
| } | | |

As reflected in Table 7, a mesh decoding method according to some embodiments includes: decoding mesh-based 3D volumetric coding data, wherein decoding the mesh-based 3D volumetric coding data comprises decoding an atlas for the mesh-based 3D volumetric coding. Decoding the atlas includes decoding first atlas type information from a sequence parameter set of the atlas. In response to a determination that the first atlas type information identifies an atlas type associated with mesh-based coding, a first set of parameters is decoded from the sequence parameter set for the atlas type associated with mesh-based coding.

In some such embodiments, the first atlas type information includes an atlas type parameter, the parameter having a value indicating that the atlas type is associated with mesh-based coding.

In some embodiments, in addition to the atlas sequence parameter set, a V3C encoder/decoder may signal/-decode an Atlas Frame Parameter Set which is constrained by the syntax element ptl_profile toolset_idc. The syntax elements under the constraint will be applicable for a particular value of the ptl_profile toolset_idc. As an example, Table 8.0 provides syntax structure for Atlas Frame Parameter Set with some syntax elements (indicated with a dagger, †) contained according to the values of ptl_profile toolset_idc for a V3C-based application (i.e. V-PCC, V-DMC, MIV, or etc.).

**Table 8.0. General atlas frame parameter set RBSP syntax.**

| atlas_frame_parameter_set_rbsp( ) { | | Descriptor |
|---|---|---|
| **afps_atlas_frame_parameter_set_id** | | ue(v) |
| **afps_atlas_sequence_parameter_set_id** | | ue(v) |
| atlas_frame_tile_information( ) | | |
| **afps_output_flag_present_flag** | | u(1) |
| **afps_num_ref_idx_default_active_minus1** | | ue(v) |
| **afps_additional_lt_afoc_lsb_len** | | ue(v) |
| **afps_lod_mode_enabled_flag** | | u(1) |
| if( ptl_profile_toolset_idc == #PROFILE_TOOLSET_IDC for V-PCC/) { | † | |
| **afps_raw_3d_offset_bit_count_explicit_mode_flag** | † | u(1) |
| } else if (ptl_profile_toolset_idc == #PROFILE_TOOLSET_IDC for V-DMC) { | † | |
| ... | | |
| } | | |
| **afps_extension_present_flag** | | u(1) |
| if( afps_extension_present_flag ) { | | |
| **afps_miv_extension_present_flag** | | u(1) |
| **afps_extension_7bits** | | u(7) |
| } | | |
| if( afps _miv_extension_present_flag ) | | |
| afps_miv_extension( ) /* Specified in ISO/IEC 23090-12 */ | | |
| if( afps_extension_7bits ) | | |
| while( more_rbsp_data( ) ) | | |
| **afps_extension_data_flag** | | u(1) |
| rbsp_trailing_bits( ) | | |
| } | | |

As reflected in Table 8.0, in some embodiments, the first atlas type information includes an atlas type parameter, the parameter having a value indicating that the atlas type is associated with mesh-based coding. In response to a determination that the first atlas type information identifies an atlas type associated with mesh-based coding, a second set of parameters for the atlas type associated with mesh-based coding is decoded from an atlas frame parameter set.

In another embodiment, the V3C application-specific syntax elements in the parameter sets are provided in a different syntax function. For example, the syntax structure may be called asps application specific_parameter(). The asps_application specific_parameter() syntax structure contains syntax elements which correspond to the parameters that are dependent on the V3C application.

Each application specification such as V-DMC, MIV, etc. may define a different set of syntax elements as sequence-level parameters in the asps application specific_parameter() syntax structure. The following syntax may be used for an atlas sequence_parameter set rbsp() that includes an asps application specific_parameters() data structure (indicated with a dagger, †).

| atlas_sequence_parameter_set_rbsp( ) { | Descriptor |
|---|---|
| **asps_atlas_sequence_parameter_set_id** | ue(v) |

(continued)

| | |
|---|---|
| **asps_frame_width** | ue(v) |
| **asps_frame_height** | ue(v) |
| **asps_geometry_3d_bit_depth_minus1** | u(5) |
| **asps_geometry_2d_bit_depth_minus1** | u(5) |
| **asps_log2_max_atlas_frame_order_cnt_lsb_minus4** | ue(v) |
| **asps_max_dec_atlas_frame_buffering_minus1** | ue(v) |
| **asps_long_term_ref_atlas_frames_flag** | u(1) |
| **asps_num_ref_atlas_frame_lists_in_asps** | ue(v) |
| for( i = 0; i < asps_num_ref_atlas_frame_lists_in_asps; i++ ) | |
|     ref_list_struct( i ) | |
| **asps_application_specific_parameters()** † | |
| **asps_vui_parameters_present_flag** | u(1) |
| if( asps_vui_parameters_present_flag ) | |
|     vui_parameters( ) | |
| **asps_extension_present_flag** | u(1) |
| if( asps_extension_present_flag ) { | |
|     **asps_vpcc_extension_present_flag** | u(1) |
|     **asps_miv_extension_present_flag** | u(1) |
|     **asps_extension_6bits** | u(1) |
| } | |
| if( asps_vpcc_extension_present_flag ) | |
|     asps_extension( ) /* Specified in Annex H */ | |
| if( asps_miv_extension_present_flag ) | |
|     asps_miv_extension( ) /* Specified in ISO/IEC 23090-12 */ | |
| if( asps_extension_6bits ) | |
|     while( more_rbsp_data( ) ) | |
|         **asps_extension _data_flag** | u(1) |
| rbsp_trailing_bits( ) | |
| } | |

In an example embodiment, the asps_application_specific_parameters () for V-PCC and MIV may be as shown in the table below. Currently, the syntax elements in the following table are common to V-PCC and MIV. These may be specified in V3C specification or individual V-PCC and MIV specifications.

| asps_application_specific_parameters () { | Descriptor |
|---|---|
| **asps_use_eight_orientations_**flag | u(1) |
| **asps_extended_projection_enabled_flag** | u(1) |
| if( asps_extended_projection_enabled_flag ) | |
|     **asps_max_number_projections_minus1** | ue(v) |
| **asps_normal_axis_limits_quantization_enabled_flag** | u(1) |
| **asps_normal_axis_max_delta_value_enabled_flag** | u(1) |

(continued)

| | |
|---|---|
| **asps_patch_precedence_order_flag** | u(1) |
| **asps_log2_patch_packing_block_size** | u(3) |
| **asps_patch_size_quantizer_present_flag** | u(1) |
| **asps_map_count_minus1** | u(4) |
| **asps_pixel_deinterleaving_enabled_flag** | u(1) |
| if( asps_pixel_deinterleaving_enabled_flag ) | |
| for( j = 0; j <= asps_map_count_minus1; j++ ) | |
| **asps_map_pixel_deinterleaving_flag**[ j ] | u(1) |
| **asps_raw_patch_enabled_flag** | u(1) |
| **asps_eom_patch_enabled_flag** | u(1) |
| if( asps_eom_patch_enabled_flag && asps_map_count_minus1 == 0 ) | |
| **asps_eom_fix_bit_count_minus1** | u(4) |
| if( asps_raw_patch_enabled_flag || asps_eom_patch_enabled_flag ) | |
| **asps_auxiliary_video_enabled_flag** | u(1) |
| **asps_plr_enabled_flag** | u(1) |
| if( asps_plr_enabled_flag ) | |
| asps_plr_information( asps_map_count_minus1 ) | |
| } | |

In an example embodiment, using the proposed syntax structure asps application specific_parameters(), no new syntax elements are introduced. Therefore, any V-PCC and/or MIV decoder will be able to decode the Atlas Sequence Parameter Set as is without any modification. This ensures backward compatibility support.

Similarly, any other V3C-based application may define application specific sequence-level parameters. For example, V-DMC specification may define sequence-level parameters under asps application specific_parameters() syntax function as shown below.

| asps_application_specific_parameters () { | Descriptor |
|---|---|
| # **V-DMC specific parameters** | |
| } | |

Similar to the asps_application specific_parameter() function, a V3C encoder/decoder may signal/decode an afps application specific_parameter() function. The syntax elements under the afps application specific_parameter() syntax function may be applicable for a particular V3C-based application. As an example, Table 8.1 provides syntax structure for Atlas Frame Parameter Set with afps application specific_parameter() syntax function (indicated with a dagger, †).

**Table 8.1 General atlas frame parameter set RBSP syntax**

| atlas_frame_parameter_set_rbsp( ) { | Descriptor |
|---|---|
| **afps_atlas_frame_parameter_set_id** | ue(v) |
| **afps_atlas_sequence_parameter_set_id** | ue(v) |
| atlas_frame_tile_information( ) | |
| **afps_output_flag_present_flag** | u(1) |
| **afps_num_ref_idx_default_active_minus1** | ue(v) |
| **afps_additional_lt_afoc_lsb_len** | ue(v) |

13

(continued)

| | |
|---|---|
| **afps_lod_mode_enabled_flag** | u(1) |
| afps_application_specific_parameter() † | |
| **afps_extension_present_flag** | u(1) |
| if( afps_extension_present_flag ) { | |
| **afps_miv_extension_present_flag** | u(1) |
| **afps_extension_7bits** | u(7) |
| } | |
| if( afps_miv_extension_present_flag ) | |
| afps_miv_extension( ) /* Specified in ISO/IEC 23090-12 */ | |
| if( afps_extension_7bits ) | |
| while( more_rbsp_data( ) ) | |
| **afps_extension_data_flag** | u(1) |
| rbsp_trailing_bits( ) | |
| } | |

For example, an afps_application specific_parameter() syntax function such as the following may carry information related to V-PCC and MIV.

| | |
|---|---|
| afps_application_specific_parameter() { | |
| **afps_raw_3d_offset_bit_count explicit_mode_flag** | u(1) |
| } | |

Similarly, any other V3C-based application may define application specific frame-level parameters. For example, V-DMC specification may define frame-level parameters under afps application specific_parameters() syntax function as shown below.

| |
|---|
| afps_application_specific_parameter() { |
| # V-DMC specific frame-level parameter |
| } |

Syntax functions as described herein, such as asps_application specific_parameters() and afps application specific_parameters(), promote bandwidth reduction as syntax elements specific to each V3C-based application will be stored in the parameter sets. An atlas decoder for V-DMC will parse and decode an atlas bitstream only with V-DMC related information. An atlas decoder for V-PCC, or MIV will parse and decode an atlas bitstream only with V-PCC and/or MIV related information. This methodology does not require a harmonized atlas decoder design that would be capable of decoding information related to all different V3C-based applications such as V-PCC, MIV, V-DMC and etc.

Some systems and methods as described herein further include a parameter in an atlas video parameter set to indicate the type of data stored in the current bitstream and consequently in the atlas. For example, some implementations may add a parameter in the V3C VPS data, defined in "8.3.4.1 General V3C parameter set syntax", to indicate the type of data.

In some embodiments, the parameter used in the atlas video parameter set to indicate the type of data stored in the current bitstream may be a parameter v3c_type in a V3C VPS. In some embodiments, the parameter v3c_type may have one the following values:

- VPCC_TYPE = 0 : corresponding V-PCC bitstream
- MIV_TYPE = 1 : corresponding MIV bitstream
- VDMC_TYPE = 2 : corresponding V-DMC bitstream

In some embodiments, additional values may be assigned to other types of bitstreams.

In some embodiments, this parameters, such as a v3c_type parameter, is provided as part of the VPS as shown in Table 7.

**Table 9. Example V3C parameter set syntax.**

| v3c_parameter_set( numBytesInV3CPayload ) { | Descriptor |
|---|---|
| profile_tier_level( ) | |
| **vps_v3c_parameter_set_id** | u(4) |
| **vps_reserved_zero_8bits** | u(8) |
| **vps_codec_type** † | u(2) \| ue(v) |
| **vps_atlas_count_minus1** | u(6) |
| for( k = 0; k < vps_atlas_count_minus1 + 1; k++ ) { | |
| **vps_atlas_id**[ k ] | u(6) |
| j = vps_atlas_id[ k ] | |
| **vps_frame_width**[ j ] | ue(v) |
| **vps_frame_height**[ j ] | ue(v) |
| **vps_map_count_minus1**[ j ] | u(4) |
| if( vps_map_count_minus1 [ j ] > 0 ) | |
| **vps_multiple_map_streams_present_flag**[ j ] | u(1) |
| vps_map_absolute_coding_enabled_flag[ j ][ 0 ] = 1 | |
| vps_map_predictor_index_diff[ j ][ 0 ] = 0 | |
| for( i = 1; i <= vps_map_count_minus1 [ j ]; i++ ) { | |
| if( vps_multiple_map_streams_present_flag[ j ] ) | |
| **vps_map_absolute_coding_enabled_flag**[ j ][ i ] | u(1) |
| else | |
| vps _map_absolute_coding_enabled_flag[ j ][ i ] = 1 | |
| if( vps_map_absolute_coding_enabled_flag[ j ][ i ] == 0 ) { | |
| **vps_map_predictor_index_diff**[ j ][ i ] | ue(v) |
| } | |
| } | |
| **vps_auxiliary_video_present_flag**[ j ] | u(1) |
| **vps_occupancy_video_present_flag**[ j ] | u(1) |
| **vps_geometry_video_present_flag**[ j ] | u(1) |
| **vps_attribute_video_present_flag**[ j ] | u(1) |
| if( vps_occupancy_video_present_flag[ j ] ) | |
| occupancy_information( j ) | |
| if( vps_geometry_video_present_flag[ j ] ) | |
| geometry_information( j ) | |
| if( vps_attribute_video_present_flag[ j ] ) | |
| attribute_information( j ) | |
| } | |
| **vps_extension_present_flag** | u(1) |

(continued)

| | |
|---|---|
| if( vps_extension_present_flag ) { | |
| **vps_extension_count** | u(8) |
| } | |
| if( vps_extension_count ) { | |
| **vps_extensions_length_minus1** | ue(v) |
| for( i = 0; i < vps_extension_count; i++ ) { | |
| **vps_extension_type**[ i ] | u(8) |
| **vps_extension_length**[ i ] | u(16) |
| vps_extension( vps_extension_type[ i ], vps_extension_length[ i ] ) | |
| } | |
| } | |
| byte_alignment( ) | |
| } | |

Features marked with a dagger (†) are features that are added or revised in example embodiments as compared to the general V3C parameter set syntax (section 8.3.4.1).

In some embodiments, rather than using a single parameter such as the example v3c_type parameter shown above, the type of the bitstream carried by the V3C bitstream may be coded using an individual flag for each bitstream type, such as the following three flags:

- vpc_vpcc_flag
- vps_miv_flag
- vdmc_vdmc_flag

Example embodiments that use a v3c_type parameter or a flag as shown above may not be backward compatible with some existing bitstreams. Some example embodiments provide for backward compatibility with at least some existing bitstream syntaxes. In one such embodiment, an existing parameter such as the parameter vps_reserved_zero_8bits is used to code the type. In this case backward compatibility may be maintained. For example, if the parameter vps_reserved_zero_8bits is zero, then a conventional bitstream structure may be used, while non-zero values may be used to indicate other video parameter set types, and the bitstream syntax may be adjusted accordingly.

Some alternative embodiments maintain backward compatibility by providing an extension that allows for looping over the atlases and defining for each of those what kind of data is conveyed. MPEG immersive video (MIV), which was built on top of the V-PCC specification, has already defined a VPS extension that enables MIV data to be conveyed while not broking the backward compatibility with V-PCC.

In some embodiments, information provided at the V3C bitstream level (from the VPS) of the type of the data stored in the atlas enables conditional enabling or disabling of the inclusion of syntax elements at lower levels in the bitstream. For example, the presence or absence of some syntax elements may be conditioned on whether the bitstream is based on, e.g., V-PCC, MIV, V-DMC, or other future data. For instance, some parameters may be present in or absent from syntax elements such as atlas_tile_data_header and/or atlas_tile_data_unit syntaxes. As shown in Table 8, a substantial amount of information can be omitted by excluding parameters that are related only to codec type that is not being used. For example, several parameters may be omitted when V-PCC is not being used. Thus, including such data depending on the kind of data :

**Table 10. Atlas tile header syntax (Section 8.3.6.11)**

| atlas_tile_header( ) { | Descriptor |
|---|---|
| if( nal_unit_type >= NAL_BLA_W_LP && nal_unit_type <= NAL_RSV_IRAP_ACL_29 ) | |
| **ath_no_output_of_prior_atlas_frames_flag** | u(1) |
| **ath_atlas_frame_parameter_set_id** | ue(v) |
| **ath_atlas_adaptation_parameter_set_id** | ue(v) |

(continued)

| | |
|---|---|
| **ath_id** | u(v) |
| **ath_type** | ue(v) |
| if( afps_output_flag_present_flag ) | |
|     **ath_atlas_output_flag** | u(1) |
| **ath_atlas_frm_order_cnt_lsb** | u(v) |
| if( asps_num_ref_atlas_frame_lists_in_asps > 0 ) | |
|     **ath_ref_atlas_frame_list_asps_flag** | u(1) |
| if( ath_ref_atlas_frame_list_asps_flag == 0 ) | |
|     ref_list_struct( asps_num_ref_atlas_frame_lists_in_asps ) | |
| else if( asps_num_ref_atlas_frame_lists_in_asps > 1 ) | |
|     **ath_ref_atlas_frame_list_idx** | u(v) |
| for( j = 0; j < NumLtrAtlasFrmEntries[ RlsIdx ]; j++ ) { | |
|     **ath_additional_afoc_lsb_present_flag[ j ]** | u(1) |
| if( ath_additional_afoc_lsb_present_flag[ j ] ) | |
|     **ath_additional_afoc_lsb_val[ j ]** | u(v) |
|     } | |
| if( ath_type != SKIP_TILE ) { | |
|     if( vps_codec_type == VPCC_TYPE ) { † | |
|       if( asps_normal_axis_limits_quantization_enabled_flag ) { | |
|         **ath_pos_min_d_quantizer** | u(5) |
|         if( asps_normal_axis_max_delta_value_enabled_flag ) | |
|           **ath_pos_delta_max_d_quantizer** | u(5) |
|         } | |
|       if( asps_patch_size_quantizer_present flag ) { | |
|         **ath_patch_size_x_info_quantizer** | u(3) |
|         **ath_patch_size_y_info_quantizer** | u(3) |
|         } | |
|       if( afps_raw_3d_offset_bit_count_explicit_mode_flag ) | |
|         **ath_raw_3d_offset_axis_bit_count_minus1** | u(v) |
|     } † | |
|     if( ath_type == P_TILE && num_ref_entries[ RlsIdx ] > 1 ) { | |
|       **ath_num_ref_idx_active_override_flag** | u(1) |
|       if( ath_num_ref_idx_active_override_flag ) | |
|         **ath_num_ref_idx_active_minus1** | ue(v) |
|     } | |
|     } | |
| byte_alignment( ) | |
| } | |

Features marked with a dagger (†) are features that are added or revised in example embodiments as compared to the V3C atlas tile header syntax (section 8.3.6.11).

As reflected in Table 10, in some embodiments, third atlas type information is decoded from a video parameter set. In response to a determination that the third atlas type information does not indicate an atlas type associated with point cloud coding, at least one of the following parameters is not coded in an atlas tile header: ath_pos_min_d_quantizer, ath_pos_delta_max_d_quantizer, ath_patch_size_x_info_quantizer, ath_patch_size_y_info_quantizer, or ath_raw_3d_offset_axis_bit_count_minus1.

**Table 11. General atlas tile data unit syntax.**

| atlas_tile_data_unit( tileID ) { | Descriptor |
|---|---|
| if( ath_type == SKIP_TILE ) { | |
| fore p = 0; p < RefAtduTotalNumPatches[ tileID ]; p++ ) | |
| skip_patch_data_unit( ) | |
| } else { | |
| p = 0 | |
| do { | |
| **atdu_patch_mode**[ tileID ][ p ] | ue(v) |
| isEnd = ( ath_type== P_TILE && atdu_patch_mode[ tileID ][ p ] == P_END) \|\| ( ath_type == I_TILE && atdu_patch_mode[ tileID ][ p ] == I_END ) | |
| if( ! isEnd ) { | |
| if( vps_codec_type == VPCC_TYPE ) † | |
| patch_vpcc_information_data( tileID , p , atdu_patch_mode[ tileID ][ p ] ) | |
| if( vps_codec_type == VDMC_TYPE ) { † | |
| patch_vdmc_information_data( tileID , p , atdu_patch_mode[ tileID ][ p ] ) † | |
| p++ | |
| } | |
| } while( ! isEnd ) | |
| } | |
| AtduTotalNumPatches[ tileID ] = p | |
| } | |

Features marked with a dagger (†) are features that are added or revised in example embodiments as compared to the V3C atlas tile data unit syntax (section 8.3.7.1).

As reflected in Table 11, some embodiments include decoding third atlas type information from a video parameter set. In response to a determination that the third atlas type information indicates an atlas type associated with mesh-based coding, mesh-based patch information is decoded from an atlas tile data unit.

In some embodiments, the default value for vps_codec_type may be assigned to (VPCC_TYPE) when not present at the VPS level, which would enable to maintain the backward compatibility with the current V3C standard.

Some embodiments may make use of application-based atlas tile data. In some embodiments, the value of ptl_profile toolset_idc may be used to determine the type of patch/atlas tile data unit within the V3C bitstream. Having information indicating the values of ptl_profile toolset idc, a V3C decoder may infer the type of atlas tile data or patches contained within the V3C bitstream. Such a scenario may involve a syntax structure as shown in Table 12. A V3C encoder may signal application-specific atlas tile data depending on the value of ptl_profile toolset idc reserved for the particular application (i.e. V-PCC, MIV, V-DMC, etc.). Since the syntax element ptl_profile toolset_idc is available in the Atlas sequence parameter set, the value of the syntax element may be used to infer the type of atlas tile data unit.

Table 12. Modified Atalas tile layer RBSP syntax structure with constrained based on ptl_profile_toolset_idc

| atlas_tile_layer_rbsp( ) { | Descriptor |
|---|---|
| atlas_tile_header( ) | |
| if( ptl_profile_toolset_idc == #PROFILE_TOOLSET_IDC for V-PCC/) { | |

(continued)

| | |
|---|---|
| Atlas_tile_data_unit(ath_id) /* Specified in ISO/IEC 23090-5 and/or ISO/IEC 23090-12 † | u(1) |
| } else if (ptl_profile_toolset_idc == #PROFILE_TOOLSET_IDC for V-DMC) { † | |
| vdmc_atlas_tile_Data_unit(ath_id) /* Specified in ISO/IEC 23090-29 */ † | |
| } † | |
| atlas_tile_data_unit( ath_id ) | |
| rbsp_trailing_bits( ) | |
| } | |

In some embodiments, the syntax element ptl_profile toolset idc may be used to infer the type of patch within an atlas tile as shown in Table 13. A V3C encoder/decoder may signal/decode patch data which is specific to a particular application which is determined by the value of the syntax element ptl_profile toolset idc.

**Table 13. General atlas tile data unit syntax**

| atlas_tile_data_unit( tileID ) { | Descriptor |
|---|---|
| if( ath_type == SKIP_TILE ) { | |
| for p = 0; p < RefAtduTotalNumPatches[ tileID ]; p++ ) | |
| skip_patch_data_unit( ) | |
| } else { | |
| p = 0 | |
| do { | |
| **atdu_patch_mode[** tileID ][ p ] | ue(v) |
| isEnd = ( ath_type == P_TILE && atdu_patch mode[ tileID ][ p ] == P_END) ‖<br>( ath_type== I_TILE && atdu_patch_mode[ tileID ][ p ] == I_END ) | |
| if( ! isEnd ) { | |
| if( ptl_profile_toolset_idc == #PROFILE TOOLSET IDC VALUE FOR V-PCC ) { † | |
| patch_vpcc_information_data( tileID , ρ , atdu_patch_ mode[ tileID ][ p ] ) | |
| Else if(ptl_profile_toolset_idc == #PROFILE TOOLSET IDC VALUE FOR V-DMC ) { † | |
| patch_vdmc_information_data( tileID , p , atdu_patch_ mode[ tileID ][ p ] ) † | |
| Else if(ptl_profile_toolset_idc == #PROFILE TOOLSET IDC VALUE FOR MIV ) { † | |
| patch_miv_information_data( tileID , p , atdu_patch_mode[ tileID ][ p ] ) † | |
| Else if(ptl_profile_toolset_idc == #PROFILE TOOLSET IDC VALUE FOR OTHER APPLICATIONS ) { † | |
| Patch_OTHER_APPLICATION_information_data( tileId , p , atdu_patch_mode[ tileID ][ p ] ) † | |
| p++ | |
| } | |
| } while( ! isEnd ) | |
| } | |
| AtduTotalNumPatches[ tileID ] = p | |
| } | |

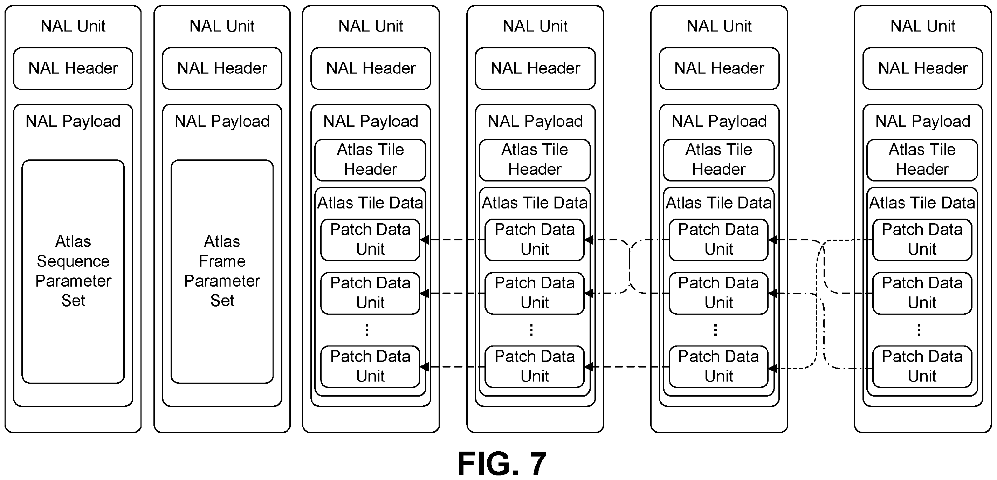

In some embodiments, atlas tile data is encapsulated in network abstraction layer (NAL) units. An example atlas NAL structure is illustrated in FIG. 7 and described in, for example, Lauri Ilola et al., "An Overview of the MPEG Standard for Storage and Transport of Visual Volumetric Video-Based Coding," Front. Signal Process., vol. 2, 29 April 2022. Each atlas tile is contained within a NAL unit. Each NAL unit in an atlas sub-bitstream is assigned a NAL unit type. In example embodiments, the atlas tile type is deduced from the NAL unit it is contained within. For example, Table 15 illustrates an example relationship between atlas tile type and NAL unit type. Example embodiments make use of this relationship to determine the type of atlas from the NAL unit type rather than signaling the type of the atlas tile in the bitstream.

Some such embodiments do not signal the atlas tile header type parameter (e.g. ath_type) in the atlas tile header (e.g. atlas_tile_header). Instead, in some embodiments, a value corresponding to this header type parameter is derived from the NAL unit type, e.g. from the parameter nal_unit_type stored in nal_unit_header. Such embodiments allow a reduction in the size of the atlas tile header syntax. In an example embodiment, the updated atlas_type_header syntax is as shown in Table 14.

**Table 14. Updated atlas tile header syntax**

| atlas_tile_header( ) { | Descriptor |
|---|---|
| if( nal_unit_type >= NAL_BLA_W_LP && nal_unit_type <= NAL_RSV_IRAP_ACL_29 ) | |
| **ath_no_output_of_prior_atlas_frames_flag** | u(1) |
| **ath_atlas_frame_parameter_set_id** | ue(v) |
| **ath_atlas_adaptation_parameter_set_id** | ue(v) |
| **ath_id** | u(v) |
| ath_type = deriveAthType(nal unit_type) † | |
| if( afps_output_flag_present_flag ) | |
| **ath_atlas_output_flag** | u(1) |
| ... | ... |
| byte_alignment( ) | |
| } | |

The feature marked with a dagger (†) is revised in example embodiments as compared to the V3C atlas tile header syntax (section 8.3.6.11).

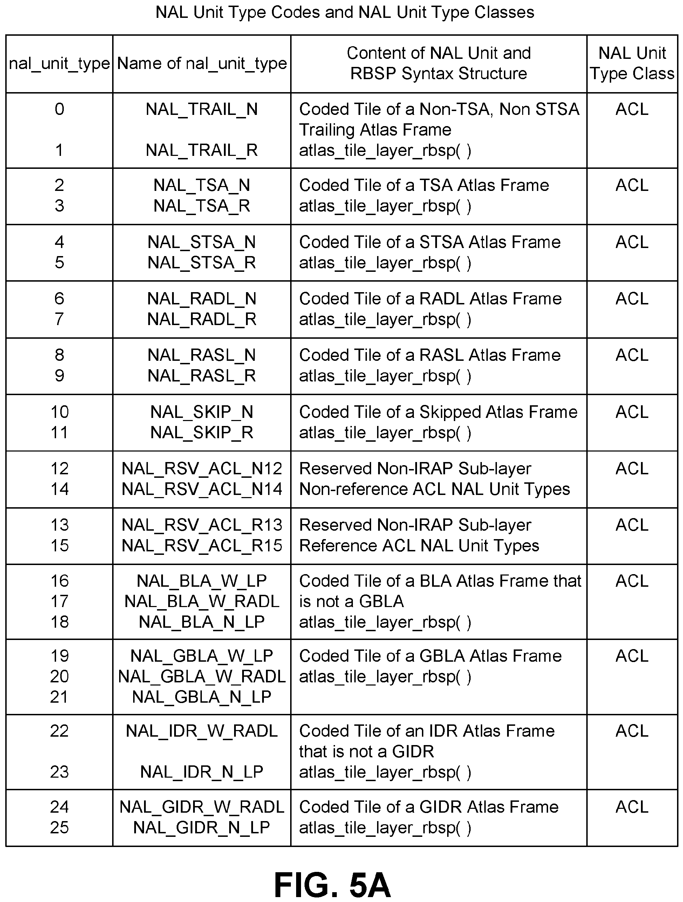

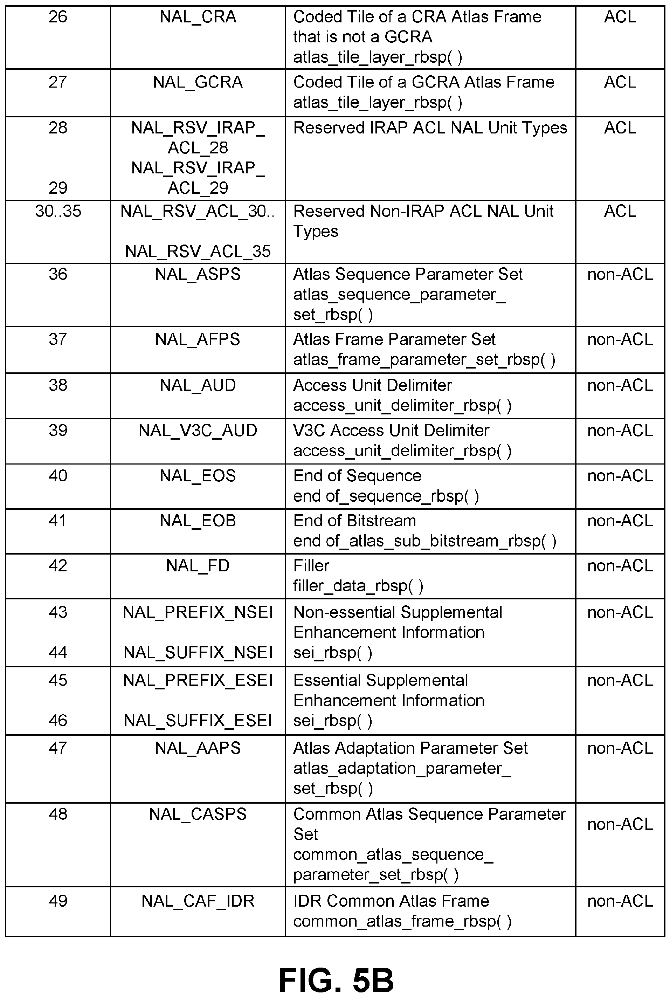

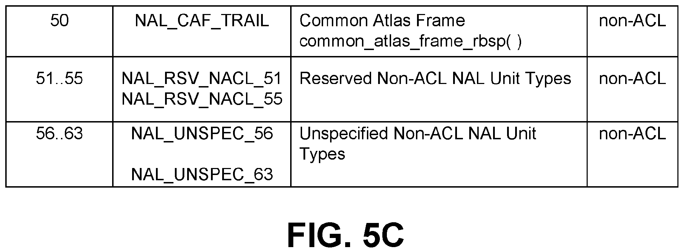

In some such embodiments, the ath_type information is derived from the nal_unit_type stored in nal_unit_header without requiring any extra information from the bitstream. FIGs. 5A-5C illustrate an example relationship between the nal_unit_type parameter and the corresponding semantics as used in V3C.

Table 15 illustrates an example of how the first 36 types that define atlas coding layer type (ACL) are derived to set the ath_type. Specifically, the table shows an example of a way to derive the ath_type from the nal_unit_type.

**Table 15. Derive ath_type based on nal_unit_type.**

| nal_unit_type | Name of nal_unit_type | Derived ath_type |
|---|---|---|
| 0<br>1 | NAL_TRAIL_N<br>NAL_TRAIL_R | P_TILE |
| 2<br>3 | NAL_TSA_N<br>NAL_TSA_R | P_TILE |
| 4<br>5 | NAL_STSA_N<br>NAL_STSA_R | P_TILE |
| 6<br>7 | NAL_RADL_N<br>NAL_RADL_R | P_TILE |
| 8<br>9 | NAL_RASL_N<br>NAL_RASL_R | P_TILE |
| 10<br>11 | NAL_SKIP_N<br>NAL_SKIP_R | SKIP_TILE |
| 12 | NAL_RSV_ACL_N12 | P_TILE |

(continued)

| nal_unit_type | Name of nal_unit_type | Derived ath_type |
|---|---|---|
| 14 | NAL_RSV_ACL_N14 | |
| 13<br>15 | NAL_RSV_ACL_R13<br>NAL_RSV_ACL_R15 | P_TILE |
| 16<br>17<br>18 | NAL_BLA_W_LP<br>NAL_BLA_W_RADL<br>NAL_BLA_N_LP | I_TILE |
| 19<br>20<br>21 | NAL_GBLA_W_LP<br>NAL_GBLA_W_RADL<br>NAL_GBLA_N_LP | I_TILE |
| 22<br>23 | NAL_IDR_W_RADL<br>NAL_IDR_N_LP | I_TILE |
| 24<br>25 | NAL_GIDR_W_RADL<br>NAL_GIDR_N_LP | I_TILE |
| 26 | NAL_CRA | I_TILE |
| 27 | NAL_GCRA | I_TILE |
| 28<br>29 | NAL_RSV_IRAP_ACL_2 8<br>NAL_RSV_IRAP_ACL_2 9 | I_TILE |
| 30..35 | NAL_RSV_ACL_30..<br>NAL_RSV_ACL_35 | P_TILE |

In some embodiments, the derivation of the atlas type from the NAL unity type is performed using a method as illustrated in the following source code:

```
PCCTileType deriveAthType( NalUnitType nalUnitType ){
  PCCTileType athType = I_TILE;
  switch (nalUnitType) {
    case NAL_TRAIL_N:        athType = P_TILE;    break;
    case NAL_TRAIL_R:        athType = P_TILE;    break;
    case NAL_TSA_N:          athType = P_TILE;    break;
    case NAL_TSA_R:          athType = P_TILE;    break;
    case NAL_STSA_N:         athType = P_TILE;    break;
    case NAL_STSA_R:         athType = P_TILE;    break;
    case NAL_RADL_N:         athType = P_TILE;    break;
    case NAL_RADL_R:         athType = P_TILE;    break;
    case NAL_RASL_N:         athType = P_TILE;    break;
    case NAL_RASL_R:         athType = P_TILE;    break;
    case NAL_SKIP_N:         athType = SKIP_TILE; break;
    case NAL_SKIP_R:         athType = SKIP_TILE; break;
    case NAL_RSV_ACL_N12:    athType = P_TILE;    break;
    case NAL_RSV_ACL_N14:    athType = P_TILE;    break;
    case NAL_RSV_ACL_R13:    athType = P_TILE;    break;
    case NAL_RSV_ACL_R15:    athType = P_TILE;    break;
    case NAL_BLA_W_LP:       athType = I_TILE;    break;
    case NAL_BLA_W_RADL:     athType = I_TILE;    break;
    case NAL_BLA_N_LP:       athType = I_TILE;    break;
    case NAL_GBLA_W_LP:      athType = I_TILE;    break;
    case NAL_GBLA_W_RADL:    athType = I_TILE;    break;
    case NAL_GBLA_N_LP:      athType = I_TILE;    break;
    case NAL_IDR_W_RADL:     athType = I_TILE;    break;
    case NAL_IDR_N_LP:       athType = I_TILE;    break;
    case NAL_GIDR_W_RADL:    athType = I_TILE;    break;
    case NAL_GIDR_N_LP:      athType = I_TILE;    break;
    case NAL_CRA:            athType = I_TILE;    break;
    case NAL_GCRA:           athType = I_TILE;    break;
    case NAL_RSV_IRAP_ACL_28: athType = P_TILE;   break;
    case NAL_RSV_IRAP_ACL_29: athType = P_TILE;   break;
    case NAL_RSV_ACL_30:     athType = P_TILE;    break;
    case NAL_RSV_ACL_31:     athType = P_TILE;    break;
    case NAL_RSV_ACL_32:     athType = P_TILE;    break;
    case NAL_RSV_ACL_33:     athType = P_TILE;    break;
    case NAL_RSV_ACL_34:     athType = P_TILE;    break;
    case NAL_RSV_ACL_35:     athType = P_TILE;    break;
    default:                 athType = P_TILE;    break;
  }
  return athType;
}
```

The current atlas raw byte sequence payload (RBSP) of V3C is defined in section "8.3.6 Raw byte sequence payloads, trailing bits, and byte alignment syntax" and section "8.3.7 Atlas tile data unit syntax" of ISO/IEC FDIS 23090-5 2nd Edition Visual volumetric video-based coding (V3C) and video-based point cloud compression (V-PCC), ISO/IEC JTC 1/SC 29/WG 7, 23090-5:2023(E), MDS22483_WG07_N00553, MDS22483, January 2023. In particular, these sections describe the syntax of:

- Atlas sequence parameter set RBSP syntax (8.3.6.1)
- Atlas frame parameter set RBSP syntax (8.3.6.2)
- Atlas tile header syntax(8.3.6.11)
- General atlas tile data unit syntax(8.3.7.1)

These subsections describe the Atlas syntax that is used to carry V-PCC and MIV data. However, much of the stored data would not be used if a V3C bitstream were used to describe another type of data, such as V-DMC data, in the altas.

The tables below show these syntax tables. An asterisk (*) is provided to indicate data used by V-PCC but not by other codecs. In some embodiments, the signaling of some or all of that data is conditioned on the type of codec used to code the volumetric data, using techniques as described above.

**Table 16. General atlas sequence parameter set RBSP syntax (Section 8.3.6.1.1)**

| atlas_sequence_parameter_set_rbsp( ) { | | Descriptor |
|---|---|---|
| asps_atlas_sequence_parameter_set_id | | ue(v) |
| asps_frame_width | | ue(v) |
| asps_frame_height | | ue(v) |
| asps_geometry_3d_bit_depth_minus1 | | u(5) |
| asps_geometry_2d_bit_depth minus1 | | u(5) |
| asps_log2_max_atlas_frame_order_cnt_lsb_minus4 | | ue(v) |
| asps_max_dec_atlas_frame_buffering_minus1 | | ue(v) |
| asps_long_term_ref_atlas_frames_flag | | u(1) |
| asps_num_ref_atlas_frame_lists_in_asps | | ue(v) |
| for( i = 0; i < asps_num_ref_atlas_frame_lists_in_asps; i++ ) | | |
|   ref_list_struct( i ) | | |
| asps_use_eight_orientations_flag | * | u(1) |
| asps_extended_projection_enabled_flag | * | u(1) |
| if( asps_extended_projection_enabled_flag ) | * | |
|   asps_max_number_projections_minus1 | * | ue(v) |
| asps_normal_axis_limits_quantization_enabled_flag | * | u(1) |
| asps_normal_axis_max_delta_value_enabled_flag | * | u(1) |
| asps_patch_precedence_order_flag | * | u(1) |
| asps_log2_patch_packing_block_size | * | u(3) |
| asps_patch_size_quantizer_present_flag | * | u(1) |
| asps_map_count_minus1 | * | u(4) |
| asps_pixel_deinterleaving_enabled_flag | * | u(1) |
| if( asps_pixel_deinterleaving_enabled_flag ) | * | |
|   for( j = 0; j <= asps _map_count_minus1; j++ ) | * | |
|     asps_map_pixel_deinterleaving_flag[ j ] | * | u(1) |
| asps_raw_patch_enabled_flag | * | u(1) |
| asps_eom_patch_enabled_flag | * | u(1) |
| if( asps_eom_patch_enabled_flag && asps_map_count_minus1 == 0 ) | * | |
|   asps_eom_fix_bit_count_minus1 | * | u(4) |
| if( asps_raw_patch_enabled_flag ‖ asps_eom_patch_enabled_flag ) | * | |
|   asps_auxiliary_video_enabled_flag | * | u(1) |
| asps_plr_enabled_flag | * | u(1) |
| if( asps_plr_enabled_flag ) | * | |
|   asps_plr_information( asps_map_count_minus1 ) | * | |
| asps_vui_parameters_present_flag | | u(1) |
| if( asps_vui_parameters_present_flag ) | | |
|   vui_parameters( ) | | |
| asps_extension_present_flag | | u(1) |

(continued)

| | |
|---|---|
| if( asps_extension_present_flag ) { | |
| **asps_vpcc_extension_present_flag** | u(1) |
| **asps_miv_extension_present_flag** | u(1) |
| **asps_extension_6bits** | u(6) |
| } | |
| if( asps_vpcc_extension_present_flag ) | |
| asps_vpcc_extension( ) /* Specified in Annex H */ | |
| if( asps_miv_extension_present_flag ) | |
| asps_miv_extension( ) /* Specified in ISO/IEC 23090-12 */ | |
| if( asps_extension_6bits ) | |
| while( more_rbsp_data( ) ) | |
| **asps_extension_data_flag** | u(1) |
| rbsp _trailing_bits( ) | |
| } | |

**Table 17. General atlas frame parameter set RBSP syntax (Section 8.3.6.2.1)**

| atlas_frame_parameter_set_rbsp( ) { | | Descriptor |
|---|---|---|
| **afps_atlas_frame_parameter_set_id** | | ue(v) |
| **afps_atlas_sequence_parameter_set_id** | | ue(v) |
| atlas_frame_tile_information( ) | * | |
| **afps_output_flag_present_flag** | | u(1) |
| **afps_num_ref_idx_default_active_minus1** | | ue(v) |
| **afps_additional_lt_afoc_lsb_len** | | ue(v) |
| **afps_lod_mode_enabled_flag** | | u(1) |
| **afps_raw_3d_offset_bit_count_explicit_mode_flag** | * | u(1) |
| afps_extension_present_flag | | u(1) |
| if( afps_extension_present_flag ) { | | |
| **afps_miv_extension_present_flag** | | u(1) |
| **afps_extension_7bits** | | u(7) |
| } | | |
| if( afps_miv_extension_present_flag ) | | |
| afps_miv_extension( ) /* Specified in ISO/IEC 23090-12 */ | | |
| if( afps_extension_7bits ) | | |
| while( more_rbsp_data( ) ) | | |
| **afps_extension_data_flag** | | u(1) |
| rbsp_trailing_bits( ) | | |
| } | | |

**Table 18. Atlas tile header syntax (Section 8.3.6.11)**

| atlas_tile_header( ) { | Descriptor |
|---|---|
| if( nal_unit_type >= NAL_BLA_W_LP && nal_unit_type <= NAL_RSV_IRAP_ACL_29 ) | |

| | |
|---|---|
| **ath_no_output_of_prior_atlas_frames_flag** | u(1) |
| **ath_atlas_frame_parameter_set_id** | ue(v) |
| **ath_atlas_adaptation_parameter_set_id** | ue(v) |
| **ath_id** | u(v) |
| **ath_type** | ue(v) |
| if( afps_output_flag_present_flag ) | |
|   **ath_atlas_output_flag** | u(1) |
| **ath_atlas_frm_order_cnt_lsb** | u(v) |
| if( asps_num_ref_atlas_frame_lists_in_asps > 0 ) | |
|   **ath_ref_atlas_frame_list_asps_flag** | u(1) |
| if( ath_ref_atlas_frame_list_asps_flag == 0 ) | |
|   ref_list_struct( asps_num_ref_atlas_frame_lists_in_asps ) | |
| else if( asps_num_ref_atlas_frame_lists_in_asps > 1 ) | |
|   **ath_ref_atlas_frame_list_idx** | u(v) |
| for( j = 0; j < NumLtrAtlasFrmEntries[ RlsIdx ]; j++ ) { | |
|   **ath_additional_afoc_lsb_present_flag[** j ] | u(1) |
|   if( ath_additional_afoc_lsb_present_flag[ j ] ) | |
|     **ath_additional_afoc_lsb_val**[ j ] | u(v) |
| } | |
| if( ath_type != SKIP_TILE ) { | |
|   if( asps_normal_axis_limits_quantization_enabled_flag ) { | * |
|     **ath_pos_min_d_quantizer** | * u(5) |
|     if( asps_normal_axis_max_delta_value_enabled_flag ) | * |
|       **ath_pos_delta_max_d_quantizer** | * u(5) |
|   } | * |
|   if( asps_patch_size_quantizer_present_flag ) { | * |
|     **ath_patch_size_x_info_quantizer** | * u(3) |
|     **ath_patch_size_y_info_quantizer** | * u(3) |
|   } | * |
|   if( afps_raw_3d_offset_bit_count_explicit_mode_flag ) | * |
|     **ath_raw_3d_offset_axis_bit_count_minus1** | * u(v) |
|   if( ath_type == P_TILE && num_ref_entries[ RlsIdx ] > 1 ) { | |
|     **ath_num_ref_idx_active_override_flag** | u(1) |
|     if( ath_num_ref_idx_active_override_flag ) | |
|       **ath_num_ref_idx_active_minus1** | ue(v) |
|   } | |
| } | |
| byte_alignment( ) | |
| } | |

**Table 19. General atlas tile data unit syntax (Section 8.3.7.1)**

| atlas_tile_data_unit( tileID ) { | Descriptor |
|---|---|
| if( ath_type == SKIP_TILE ) { | |
| for (p = 0; p < RefAtduTotalNumPatches[ tileID ]; p++ ) | |
| skip_patch_data_unit( ) | |
| } else { | |
| p = 0 | |
| do { | |
| **atdu_patch_mode[** tileID ][ p ] | ue(v) |
| isEnd = ( ath_type== P_TILE && atdu_patch mode[ tileID ][ p ] == P_END) ‖ ( ath type == I_TILE && atdu_patch_mode[ tileID ][ p ] == I_END ) | |
| if( ! isEnd ) { | |
| patch_information_data( tileID , $\rho$ , atdu_patch_mode[ tileID ][ p ] ) * | |
| p++ | |
| } | |
| } while( ! isEnd ) | |
| } | |
| AtduTotalNumPatches[ tileID ] = p | |
| } | |

All the data marked with an asterisk (*) in the four previous tables are used to store V-PCC data that is not used by V-DMC decoder.

The following table illustrates a syntax function used to parse an atlas sample stream.

**Table 20. Sample stream NAL unit syntax (section D.2.2)**

| sample_stream_nal_unit( ) { | Descriptor |
|---|---|
| ssnu_nal_unit_size | u(v) |
| **nal_unit(ssnu_nal_unit_size )** | |
| **}** | |

**Table 21. General NAL unit syntax (section 8.3.5.1)**

| nal_unit( NumBytesInNalUnit ) { | Descriptor |
|---|---|
| nal_unit_header( ) | |
| NumBytesInRbsp = 0 | |
| for( i = 2; i < NumBytesInNalUnit; i++ ) | |
| **rbsp_byte[** NumBytesInRbsp++ ] | b(8) |
| } | |

**Table 22. NAL unit header syntax (section 8.3.5.2)**

| nal_unit_header( ) { | Descriptor |
|---|---|
| **nal_forbidden_zero_bit** | f(1) |
| **nal_unit_type** | u(6) |
| **nal_layer_id** | u(6) |

(continued)

| | |
|---|---|
| **nat_temporal_id_plus1** | u(3) |
| } | |

**Table 23. Atlas tile layer RBSP syntax (section 8.3.6.9)**

| atlas_tile_layer_rbsp( ) { | Descriptor |
|---|---|
| atlas_tile_header( ) | |
| atlas_tile_data_unit( ath_id ) | |
| rbsp_trailing_bits( ) | |
| } | |

**Table 24. Atlas tile header syntax (section 8.3.6.11)**

| atlas_tile_header( ) { | Descriptor |
|---|---|
| if( nal_unit_type >= NAL_BLA_W_LP && nal_unit_type <= NAL_RSV_IRAP_ACL_29 ) | |
| **ath_no_output_of_prior_atlas_frames_flag** | u(1) |
| **ath_atlas_frame_parameter_set_id** | ue(v) |
| **ath_atlas_adaptation_parameter_set_id** | ue(v) |
| **ath_id** | u(v) |
| **ath_type** | ue(v) |
| if( afps_output_flag_present_flag ) | |
| **ath_atlas_output_flag** | u(1) |
| ... | ... |
| byte_alignment( ) | |
| } | |

Functions for reading the information of the two types (nal_unit_type and ath_type) may be encapsulated as follows:

```
sample_stream_nal_unit(){
  nal_unit() {
    nal_unit_header(){
      read nal_unit_type // u(6)
    }
    if ( nal_unit_type is atlas_coding_layer_type ) {
      atlas_tile_layer_rbsp() {
        atlas_tile_header(){
          read ath_type // ue(v)
        }
        atlas_tile_data_unit();
      }
    }
  }
}
```

Some example embodiments make use of a profile toolset. A syntax is available in the Atlas sequence parameter set called ptl_profile toolset_idc. The parameter ptl_profile toolset idc indicates the toolset combination profile component to which the CVS conforms as specified in Annex A. Bitstreams shall not contain values of ptl_profile toolset_idc other than those specified in Annex A. Other values of ptl_profile toolset idc are reserved for future use by ISO/IEC.

A list of defined toolset profile components for V3C and their corresponding identifying syntax element values, e.g. ptl_profile toolset_id, that are defined in ISO/IEC 23090-5. The syntax element ptl_profile_toolset_idc provides the primary definition of a toolset profile. However, additional syntax elements, such as ptc one v3c frame only_flag, may be used to indicate additional characteristics or restrictions of a defined profile. Reserved values of ptl_profile toolset_idc are reserved for future use by ISO/IEC and may not be present in V3C bitstreams conforming to this version of this document.

**Example system hardware.**

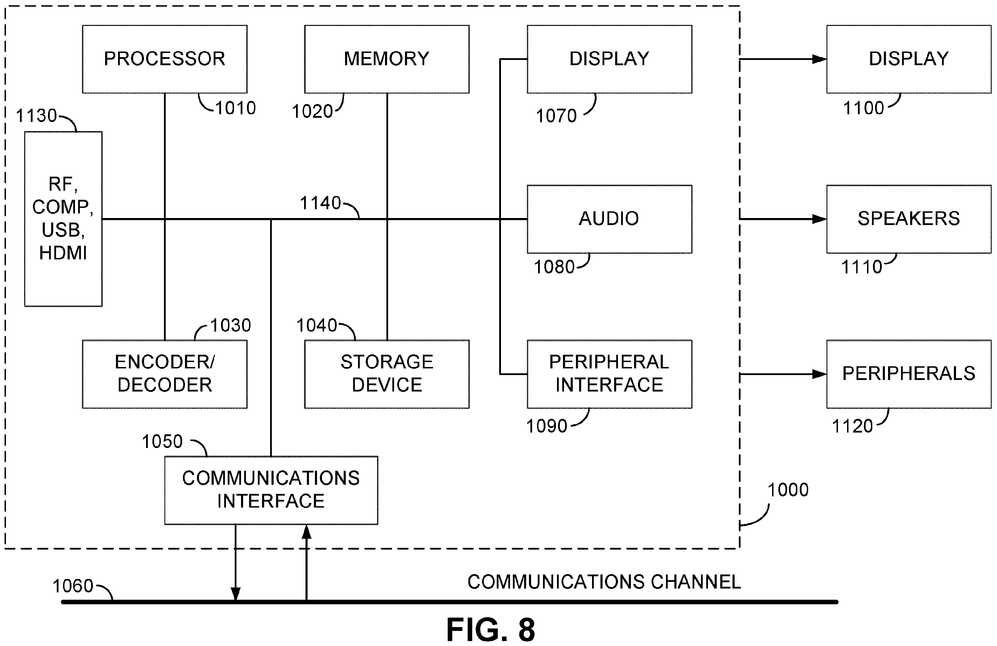

Example embodiments of encoders and/or decoders (collectively coders) configured to implement embodiments described herein may be implemented using systems such as the system of FIG. 8. FIG. 8 is a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded mesh or decoded mesh, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input mesh, the decoded mesh or portions of the decoded mesh, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 8, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Additional embodiments.**

Systems and methods are described for encoding and decoding of 3D volumetric data. Volumetric data is encoded and/or decoded using a syntax that allows for different codec types, such as a point-cloud-based codec type (e.g.. V-PCC), a mesh-based codec type (e.g. V-DMC), and a depth-image-based codec type (e.g. MIV). Example encoding and decoding techniques improve bitrates by allowing for syntax functions that are specific to different codec types, such as syntax functions related to atlas coding, to be tailored to signal only parameters that are relevant to the corresponding codec type that is is used for the volumetric coding.

A mesh decoding method according to some embodiments comprises: decoding mesh-based 3D volumetric coding data; wherein decoding the mesh-based 3D volumetric coding data comprises decoding an atlas for the mesh-based 3D volumetric coding, the atlas having an atlas type; wherein decoding the atlas includes: decoding a first syntax function from a sequence parameter set of the atlas; wherein the atlas type is associated with mesh-based coding, and decoding the first syntax function comprises decoding, from the sequence parameter set, a first set of parameters associated with mesh-based coding.

A mesh decoding apparatus according to some embodiments comprises one or more processors configured to perform at least: decoding mesh-based 3D volumetric coding data; wherein decoding the mesh-based 3D volumetric coding data comprises decoding an atlas for the mesh-based 3D volumetric coding, the atlas having an atlas type; wherein decoding the atlas includes: decoding a first syntax function from a sequence parameter set of the atlas; wherein the atlas type is associated with mesh-based coding, and decoding the first syntax function comprises decoding, from the sequence parameter set, a first set of parameters associated with mesh-based coding.

In some embodiments, decoding the atlas further includes: decoding a second syntax function from an atlas frame parameter set; wherein the atlas type is associated with mesh-based coding, and decoding the second syntax function comprises decoding, from the atlas frame parameter set, a second set of parameters associated with mesh-based coding.

In some embodiments, the atlas type is associated with mesh-based coding, and the following parameter is not coded in the sequence parameter set: afps_raw_3d_offset_bit_count_explicit_mode_flag.

In some embodiments, the first set of parameters for the atlas type associated with mesh-based coding include one or more of the following: SubdivisionIterationCount, LiftingQPs[0], LiftingQPs[1], LiftingQPs[2], InterpolateDisplacementNormals, AddReconstructedNormals, DisplacementReversePacking, WidthDispVideo, or HeightDispVideo.

In some embodiments, the atlas type is associated with mesh-based coding, and one or more of the following parameters is not coded in the sequence parameter set:

```
asps_use_eight_orientations_flag, asps_extended_projection_enabled_flag,
asps_max_number_projections_minusl,
asps_normal_axis_limits_quantization_enabled_flag,
asps_normal_axis_max_delta_value_enabled_flag,
asps_patch_precedence_order_flag, asps_log2_patch_packing_block_size,
asps_patch_size_quantizer_present_flag, asps_map_count_minusl,
asps_pixel_deinterleaving_enabled_flag, asps_map_pixel_deinterleaving_flag,
asps_raw_patch_enabled_flag, asps_eom_patch_enabled_flag,
asps_eom_fix_bit_count_minusl,asps_auxiliary_video_enabled_flag, or
asps_plr_enabled_flag.
```

A mesh encoding method according to some embodiments comprises: encoding mesh-based 3D volumetric coding data; wherein encoding the mesh-based 3D volumetric coding data comprises encoding an atlas for the mesh-based 3D volumetric coding, the atlas having an atlas type; wherein encoding the atlas includes: encoding a first syntax function in a sequence parameter set of the atlas; wherein the atlas type is associated with mesh-based coding, and encoding the first syntax function comprises encoding, in the sequence parameter set, a first set of parameters associated with mesh-based coding.

A mesh encoding apparatus according to some embodiments comprises one or more processors configured to perform at least: encoding mesh-based 3D volumetric coding data; wherein encoding the mesh-based 3D volumetric coding data comprises encoding an atlas for the mesh-based 3D volumetric coding, the atlas having an atlas type; wherein encoding the atlas includes: encoding a first syntax function in a sequence parameter set of the atlas; wherein the atlas type is associated with mesh-based coding, and encoding the first syntax function comprises encoding, in the sequence parameter set, a first set of parameters associated with mesh-based coding.

In some embodiments, encoding the atlas further includes: encoding a second syntax function in an atlas frame parameter set; wherein the atlas type is associated with mesh-based coding, and encoding the second syntax function comprises encoding, in the atlas frame parameter set, a second set of parameters associated with mesh-based coding.

In some embodiments, the atlas type is associated with mesh-based coding, and the following parameter is not coded in the sequence parameter set: afps_raw_3d_offset_bit_count_explicit_mode_flag.

In some embodiments, the first set of parameters for the atlas type associated with mesh-based coding include one or more of the following: SubdivisionIterationCount, LiftingQPs[0], LiftingQPs[1], LiftingQPs[2], InterpolateDisplacementNormals, AddReconstructedNormals, DisplacementReversePacking, WidthDispVideo, or HeightDispVideo.

In some embodiments, the atlas type is associated with mesh-based coding, and one or more of the following parameters is not coded in the sequence parameter set: asps_use_eight_orientations_flag, asps_extended_projection_n_enabled_flag, asps_max_number_projections_minusl, asps_normal_axis_limits_quantization_enabled_flag, asps_normal_axis_max_delta_value_enabled_flag, asps_patch_precedence_order_flag, asps_log2_patch_packing_block_size, asps_patch_size_quantizer_present_flag, asps_map_count_minusl, asps_pixel_deinterleaving_enabled_flag, asps_map_pixel_deinterleaving_flag, asps_raw_patch_enabled_flag, asps_eom_patch_enabled_flag, asps_eom_fix_bit_count_minusl,asps_auxiliary_video_enabled_flag, or asps_plr_enabled_flag.

Some embodiments include a bitstream encoded using any of the encoding methods described herein.

Some embodiments include a computer-readable medium storing a bitstream encoded using any of the methods described herein.

Some embodiments include a computer-readable medium (e.g. a non-transitory medium) storing instructions operative, when executed on one or more processors, to perform any of the methods described herein.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A mesh decoding method comprising:

decoding mesh-based 3D volumetric coding data;
wherein decoding the mesh-based 3D volumetric coding data comprises decoding an atlas for the mesh-based 3D volumetric coding, the atlas having an atlas type;
wherein decoding the atlas includes:

decoding a first syntax function from a sequence parameter set of the atlas;

wherein the atlas type is associated with mesh-based coding, and decoding the first syntax function comprises decoding, from the sequence parameter set, a first set of parameters associated with mesh-based coding.

2. A mesh decoding apparatus comprising one or more processors configured to perform at least:

decoding mesh-based 3D volumetric coding data;
wherein decoding the mesh-based 3D volumetric coding data comprises decoding an atlas for the mesh-based 3D volumetric coding, the atlas having an atlas type;
wherein decoding the atlas includes:

decoding a first syntax function from a sequence parameter set of the atlas;
wherein the atlas type is associated with mesh-based coding, and decoding the first syntax function comprises decoding, from the sequence parameter set, a first set of parameters associated with mesh-based coding.

3. The method of claim 1 or the apparatus of claim 2, wherein decoding the atlas further includes:

decoding a second syntax function from an atlas frame parameter set;
wherein the atlas type is associated with mesh-based coding, and decoding the second syntax function comprises decoding, from the atlas frame parameter set, a second set of parameters associated with mesh-based coding.

4. The method of claim 1 or claim 3 as it depends from claim 1, or the apparatus of claim 2 or claim 3 as it depends from claim 2, wherein the atlas type is associated with mesh-based coding, and the following parameter is not coded in the sequence parameter set:
afps_raw_3d_offset_bit_count_explicit_mode_flag.

5. The method of claim 1 or claims 3-4 as they depend from claim 1, or the apparatus of claim 2 or claims 3-4 as they depend from claim 2, wherein the first set of parameters for the atlas type associated with mesh-based coding include one or more of the following:
SubdivisionIterationCount, LiftingQPs[0], LiftingQPs[1], LiftingQPs[2], InterpolateDisplacementNormals, AddReconstructedNormals, DisplacementReversePacking, WidthDispVideo, or HeightDispVideo.

6. The method of claim 1 or claims 3-5 as they depend from claim 1, or the apparatus of claim 2 or claims 3-5 as they depend from claim 2, wherein the atlas type is associated with mesh-based coding, and one or more of the following parameters is not coded in the sequence parameter set:

```
asps_use_eight_orientations_flag, asps_extended_projection_enabled_flag,
asps_max_number_projections_minus1,
asps_normal_axis_limits_quantization_enabled_flag,
asps_normal_axis_max_delta_value_enabled_flag,
asps_patch_precedence_order_flag, asps_log2_patch_packing_block_size,
asps_patch_size_quantizer_present_flag, asps_map_count_minus1,
asps_pixel_deinterleaving_enabled_flag, asps_map_pixel_deinterleaving_flag,
asps_raw_patch_enabled_flag, asps_eom_patch_enabled_flag,
asps_eom_fix_bit_count_minus1,asps_auxiliary_video_enabled_flag, or
asps_plr enabled_flag.
```

7. A mesh encoding method comprising:

encoding mesh-based 3D volumetric coding data;
wherein encoding the mesh-based 3D volumetric coding data comprises encoding an atlas for the mesh-based 3D volumetric coding, the atlas having an atlas type;
wherein encoding the atlas includes:

encoding a first syntax function in a sequence parameter set of the atlas;
wherein the atlas type is associated with mesh-based coding, and encoding the first syntax function comprises encoding, in the sequence parameter set, a first set of parameters associated with mesh-based coding.

8. A mesh encoding apparatus comprising one or more processors configured to perform at least:

   encoding mesh-based 3D volumetric coding data;
   wherein encoding the mesh-based 3D volumetric coding data comprises encoding an atlas for the mesh-based 3D volumetric coding, the atlas having an atlas type;
   wherein encoding the atlas includes:

   encoding a first syntax function in a sequence parameter set of the atlas;
   wherein the atlas type is associated with mesh-based coding, and encoding the first syntax function comprises encoding, in the sequence parameter set, a first set of parameters associated with mesh-based coding.

9. The method of claim 7 or the apparatus of claim 8, wherein encoding the atlas further includes:

   encoding a second syntax function in an atlas frame parameter set;
   wherein the atlas type is associated with mesh-based coding, and encoding the second syntax function comprises encoding, in the atlas frame parameter set, a second set of parameters associated with mesh-based coding.

10. The method of claim 7 or claim 9 as it depends from claim 7, or the apparatus of claim 8 or claim 9 as it depends from claim 8, wherein the atlas type is associated with mesh-based coding, and the following parameter is not coded in the sequence parameter set:
    afps_raw_3d_offset_bit_count_explicit_mode_flag.

11. The method of claim 7 or claims 9-10 as they depend from claim 7, or the apparatus of claim 8 or claims 9-10 as they depend from claim 8, wherein the first set of parameters for the atlas type associated with mesh-based coding include one or more of the following:
    SubdivisionIterationCount, LiftingQPs[0], LiftingQPs[1], LiftingQPs[2], InterpolateDisplacementNormals, AddReconstructedNormals, DisplacementReversePacking, WidthDispVideo, or HeightDispVideo.

12. The method of claim 7 or claims 9-11 as they depend from claim 7, or the apparatus of claim 8 or claims 9-11 as they depend from claim 8, wherein the atlas type is associated with mesh-based coding, and one or more of the following parameters is not coded in the sequence parameter set:

```
asps_use_eight_orientations_flag, asps_extended_projection_enabled_flag,
asps_max_number_projections_minus1,
asps_normal_axis_limits_quantization_enabled_flag,
asps_normal_axis_max_delta_value_enabled_flag,
asps_patch_precedence_order_flag, asps_log2_patch_packing_block_size,
asps_patch_size_quantizer_present_flag, asps_map_count_minus1,
asps_pixel_deinterleaving_enabled_flag, asps_map_pixel_deinterleaving_flag,
asps_raw_patch_enabled_flag, asps_eom_patch_enabled_flag,
asps_eom_fix_bit_count_minus1,asps_auxiliary_video_enabled_flag, or
asps_plr_enabled_flag.
```

13. A bitstream encoded using the method of claim 7 or claims 9-12 as they depend from claim 7.

14. A computer-readable medium storing a bitstream encoded using the method of claim 7 or claims 9-12 as they depend from claim 7.

15. A computer-readable medium storing instructions operative, when executed on one or more processors, to perform the method of claim 1 or claims 3-6 as they depend from claim 1, or the method of claim 7 or claims 9-12 as they depend from claim 7.

**FIG. 1**

Intra Frame Encoder

Patch Information

Base Mesh m(i) → Quantization → Static Mesh Encoder → Compressed Base Mesh Bitstream

Static Mesh Decoder

Reconstructed Quantized Base Mesh m'(i)

Displacements d(i) → Update Displacements

Updated Displacements d'(i) → Wavelet Transform

Wavelet Coefficients e(i)

Control → Quantization

Quantized Wavelet Coefficients e'(i) → Image Packing

Packed Quantized Wavelet Coefficients → Video Encoding → Compressed Displacements Bitstream

Reconstructed Packed Quantized Wavelet Coefficients

Inverse Wavelet Transform ← Inverse Quant. ← Image Unpacking

Reconstructed Displacements d"(i)

Reconstruct Deformed Mesh ← Reconstructed Base Mesh m"(i) ← Inverse Quantization

Reconstructed Deformed Mesh DM(i)

Static/Dynamic Mesh M(i)

Attribute Map A(i) → Attribute Transfer → Updated Attribute Map A'(i) → Padding → Updated Attribute Map A'(i) → Color Space Conversion → Video Encoding → Compressed Attribute Bitstream

MUX → Compressed Bitstream b(i)

EP 4 712 028 A1

**FIG. 2**

Inter Frame Encoder

Compressed Bitstream b(i)

MUX

Compressed Motion Bitstream

Motion Decoder

Reconstruction of Base Mesh

Motion Encoder

Quantization

Patch Information

Reconstructed Quantized Reference Base Mesh m'(j)

Base Mesh m(i)

Reconstructed Quantized Base Mesh M'(i)

Update Displacements

Updated Displacements d'(i)

Wavelet Transform

Wavelet Coefficients

Quantization

Quantized Wavelet Coefficients

Image Packing

Packed Quantized Wavelet Coefficients

Video Encoding

Compressed Displacements Bitstream

Reconstructed Packed Quantized Wavelet Coefficients

Image Unpacking

Inverse Quant.

Inverse Wavelet Transform

Reconstructed Displacements d''(i)

Reconstruct Deformed Mesh

Reconstructed Deformed Mesh

Inverse Quantization

Reconstructed Base Mesh m''(i)

Displacements d(i)

Control

Reconstructed Deformed Mesh DM(i)

Attribute Transfer

Updated Attribute Map A'(i)

Padding

Updated Attribute Map A'(i)

Color Space Conversion

Updated Attribute Map A''(i)

Video Encoding

Compressed Attribute Bitstream

Static of Dynamic Mesh M(i)

Attribute Map A(i)

35

**FIG. 3**

**FIG. 4**

EP 4 712 028 A1

NAL Unit Type Codes and NAL Unit Type Classes

| nal_unit_type | Name of nal_unit_type | Content of NAL Unit and RBSP Syntax Structure | NAL Unit Type Class |
|---|---|---|---|
| 0<br><br>1 | NAL_TRAIL_N<br><br>NAL_TRAIL_R | Coded Tile of a Non-TSA, Non STSA Trailing Atlas Frame<br>atlas_tile_layer_rbsp( ) | ACL |
| 2<br>3 | NAL_TSA_N<br>NAL_TSA_R | Coded Tile of a TSA Atlas Frame<br>atlas_tile_layer_rbsp( ) | ACL |
| 4<br>5 | NAL_STSA_N<br>NAL_STSA_R | Coded Tile of a STSA Atlas Frame<br>atlas_tile_layer_rbsp( ) | ACL |
| 6<br>7 | NAL_RADL_N<br>NAL_RADL_R | Coded Tile of a RADL Atlas Frame<br>atlas_tile_layer_rbsp( ) | ACL |
| 8<br>9 | NAL_RASL_N<br>NAL_RASL_R | Coded Tile of a RASL Atlas Frame<br>atlas_tile_layer_rbsp( ) | ACL |
| 10<br>11 | NAL_SKIP_N<br>NAL_SKIP_R | Coded Tile of a Skipped Atlas Frame<br>atlas_tile_layer_rbsp( ) | ACL |
| 12<br>14 | NAL_RSV_ACL_N12<br>NAL_RSV_ACL_N14 | Reserved Non-IRAP Sub-layer Non-reference ACL NAL Unit Types | ACL |
| 13<br>15 | NAL_RSV_ACL_R13<br>NAL_RSV_ACL_R15 | Reserved Non-IRAP Sub-layer Reference ACL NAL Unit Types | ACL |
| 16<br>17<br>18 | NAL_BLA_W_LP<br>NAL_BLA_W_RADL<br>NAL_BLA_N_LP | Coded Tile of a BLA Atlas Frame that is not a GBLA<br>atlas_tile_layer_rbsp( ) | ACL |
| 19<br>20<br>21 | NAL_GBLA_W_LP<br>NAL_GBLA_W_RADL<br>NAL_GBLA_N_LP | Coded Tile of a GBLA Atlas Frame<br>atlas_tile_layer_rbsp( ) | ACL |
| 22<br><br>23 | NAL_IDR_W_RADL<br><br>NAL_IDR_N_LP | Coded Tile of an IDR Atlas Frame that is not a GIDR<br>atlas_tile_layer_rbsp( ) | ACL |
| 24<br>25 | NAL_GIDR_W_RADL<br>NAL_GIDR_N_LP | Coded Tile of a GIDR Atlas Frame<br>atlas_tile_layer_rbsp( ) | ACL |

# FIG. 5A

| 26 | NAL_CRA | Coded Tile of a CRA Atlas Frame that is not a GCRA atlas_tile_layer_rbsp( ) | ACL |
|---|---|---|---|
| 27 | NAL_GCRA | Coded Tile of a GCRA Atlas Frame atlas_tile_layer_rbsp( ) | ACL |
| 28<br><br>29 | NAL_RSV_IRAP_ACL_28<br>NAL_RSV_IRAP_ACL_29 | Reserved IRAP ACL NAL Unit Types | ACL |
| 30..35 | NAL_RSV_ACL_30..<br><br>NAL_RSV_ACL_35 | Reserved Non-IRAP ACL NAL Unit Types | ACL |
| 36 | NAL_ASPS | Atlas Sequence Parameter Set atlas_sequence_parameter_set_rbsp( ) | non-ACL |
| 37 | NAL_AFPS | Atlas Frame Parameter Set atlas_frame_parameter_set_rbsp( ) | non-ACL |
| 38 | NAL_AUD | Access Unit Delimiter access_unit_delimiter_rbsp( ) | non-ACL |
| 39 | NAL_V3C_AUD | V3C Access Unit Delimiter access_unit_delimiter_rbsp( ) | non-ACL |
| 40 | NAL_EOS | End of Sequence end of_sequence_rbsp( ) | non-ACL |
| 41 | NAL_EOB | End of Bitstream end of_atlas_sub_bitstream_rbsp( ) | non-ACL |
| 42 | NAL_FD | Filler filler_data_rbsp( ) | non-ACL |
| 43<br><br>44 | NAL_PREFIX_NSEI<br><br>NAL_SUFFIX_NSEI | Non-essential Supplemental Enhancement Information sei_rbsp( ) | non-ACL |
| 45<br><br>46 | NAL_PREFIX_ESEI<br><br>NAL_SUFFIX_ESEI | Essential Supplemental Enhancement Information sei_rbsp( ) | non-ACL |
| 47 | NAL_AAPS | Atlas Adaptation Parameter Set atlas_adaptation_parameter_set_rbsp( ) | non-ACL |
| 48 | NAL_CASPS | Common Atlas Sequence Parameter Set common_atlas_sequence_parameter_set_rbsp( ) | non-ACL |
| 49 | NAL_CAF_IDR | IDR Common Atlas Frame common_atlas_frame_rbsp( ) | non-ACL |

# FIG. 5B

| 50 | NAL_CAF_TRAIL | Common Atlas Frame common_atlas_frame_rbsp( ) | non-ACL |
|---|---|---|---|
| 51..55 | NAL_RSV_NACL_51 NAL_RSV_NACL_55 | Reserved Non-ACL NAL Unit Types | non-ACL |
| 56..63 | NAL_UNSPEC_56 NAL_UNSPEC_63 | Unspecified Non-ACL NAL Unit Types | non-ACL |

# FIG. 5C

EP 4 712 028 A1

**V3C Sample Stream**

Sample Stream V3C Header

Sample Stream V3C Unit
- V3C Unit

Sample Stream V3C Unit
- V3C Unit

⋮

or

**V3C Unit Stream**

V3C Unit

V3C Unit

⋮

**V3C Parameter Set**

Unit Type V3C_VPS

V3C Parameter Set
- VPS Parameters...
- VPS V-PCC Extension
- VPS MIV Extension

**Attribute Video Data**

Unit Type V3C_AVD

| VPS ID | Atlas ID |
|---|---|

Map Index

Aux. Video Flag

Attribute Index

Attr. Partition Index

Video Sub Bitstream

**Atlas Data**

Unit Type V3C_AD

| VPS ID | Atlas ID |
|---|---|

Atlas Sub Bitstream

**Geometry Video Data**

Unit Type V3C_GVD

| VPS ID | Atlas ID |
|---|---|

Map Index

Aux. Video Flag

Video Sub Bitstream

**Occupancy Video Data**

Unit Type V3C_OVD

| VPS ID | Atlas ID |
|---|---|

Video Sub Bitstream

**Atlas Sub Bitstream**

Sample Stream NAL Header

Sample Stream NAL Unit
- NAL Unit

Sample Stream NAL Unit
- NAL Unit

⋮

**NAL Unit**

Unit Type

Layer ID

Temporal ID

Raw Byte Sequence Payload (RBSP)

A

A'

## FIG. 6A

(A)

Atlas Sequence
Parameter Set (ASPS)

ASPS Parameters...

Volumetric Usability
Information (VUI)

ASPS V-PCC Ext.

ASPS MIV Ext.

Atlas Tile Layer (ATL)
I_TILE_GRP (Intra)

Patch Data Unit

MIV Extension

Patch Data Unit

MIV Extension

⋮

Atlas Adaptation
Parameter Set (AAPS)

AAPS Parameters...

AAPS V-PCC Ext.

ASPS MIV Ext.

Volumetric Usability
Information (VUI)

Atlas Frame Parameter
Set (AFPS)

AFPS Parameters...

AFPS V-PCC Ext.

AFPS MIV Ext.

(A) →

Frame Order Count
(Skip Multiple Frames)

Frame Order Count

Supplemental
Enhancement
Information (SEI)

SEI Message

⋮

(A')

# FIG. 6B

NAL Unit — NAL Header — NAL Payload — Atlas Tile Header — Atlas Tile Data — Patch Data Unit — Patch Data Unit — ... — Patch Data Unit

NAL Unit — NAL Header — NAL Payload — Atlas Tile Header — Atlas Tile Data — Patch Data Unit — Patch Data Unit — ... — Patch Data Unit

NAL Unit — NAL Header — NAL Payload — Atlas Tile Header — Atlas Tile Data — Patch Data Unit — Patch Data Unit — ... — Patch Data Unit

NAL Unit — NAL Header — NAL Payload — Atlas Tile Header — Atlas Tile Data — Patch Data Unit — Patch Data Unit — ... — Patch Data Unit

NAL Unit — NAL Header — NAL Payload — Atlas Frame Parameter Set

NAL Unit — NAL Header — NAL Payload — Atlas Sequence Parameter Set

**FIG. 7**

**FIG. 8**

EP 4 712 028 A1

902

OBTAIN BITSTREAM
REPRESENTING 3D
VOLUMETRIC CODING DATA

904

BEGIN DECODING ATLAS
SUB-BITSTREAM

906

BEGIN DECODING ATLAS
SEQUENCE PARAMETER SET
(SPS)

908

SPS
INDICATES MESH-
BASED CODING
?

No

914

DECODE ATLAS
PARAMETERS FOR
OTHER CODING TYPES
(E.G. POINT CLOUD OR
IMMERSIVE VIDEO)

Yes

910

DECODE ATLAS PARAMETERS
FOR MESH-BASED CODING
FROM SPS

912

DECODE BITSTREAM
ACCORDING TO PARAMETERS

# FIG. 9

1202

ENCODE BITSTREAM
REPRESENTING 3D
VOLUMETRIC CODING DATA

1204

BEGIN ENCODING ATLAS
SUB-BITSTREAM

1206

BEGIN ENCODING ATLAS
SEQUENCE PARAMETER SET
(SPS)

1208

SPS
INDICATES MESH-
BASED CODING
?

No

Yes

1214

ENCODE ATLAS
PARAMETERS FOR
OTHER CODING TYPES
(E.G. POINT CLOUD OR
IMMERSIVE VIDEO)

1210

ENCODE ATLAS PARAMETERS
FOR MESH-BASED CODING
FROM SPS

1212

ENCODE BITSTREAM
ACCORDING TO PARAMETERS

FIG. 10

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ISO: "Information technology - Coded representation of immersive media - Part 5: Visual volumetric video-based coding (V3C) and video-based point cloud compression (V-PCC)", ISO/IEC JTC 1/SC 29/WG 07; ONLINE; , no. m65840 5 May 2023 (2023-05-05), XP030313657, Retrieved from the Internet: URL:https://dms.mpeg.expert/doc_end_user/d ocuments/145_OnLine/wg11/m65840-v1-m65840. zip m65840_displacement/m65840_V3C_WD.docx [retrieved on 2023-12-14] | 1-4, 6-10, 12-15 | INV. G06T9/00 H04N19/597 H04N19/70 |
| Y | * page 27, paragraph 7.1 * * page 43, paragraph 8.3.6.2.1 - page 45, paragraph 8.3.6.3 * * page 41, paragraph 8.3.6.1.1 - page 42 * * page 81, paragraph 8.4.6.2 - paragraph 8.4.6.2.1 * * page 103, paragraph 9.2 * | 5,11 | |
| | ----- | | |
| | -/-- | | TECHNICAL FIELDS SEARCHED (IPC) G06T H04N |

The present search report has been drawn up for all claims

| Place of search | Date of completion of the search | Examiner |
|---|---|---|
| Munich | 4 February 2025 | Moschetti, Fulvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 30 6482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ISO: "Information technology – Coded representation of immersive media – Part 29: Video-based dynamic mesh coding (V-DMC)WD stage", ISO/IEC JTC 1/SC 29/WG 7 ONLINE; , no. m65840 31 August 2023 (2023-08-31), XP030313656, Retrieved from the Internet: URL:https://dms.mpeg.expert/doc_end_user/documents/145_OnLine/wg11/m65840-v1-m65840.zip m65840_displacement/m65840_VDMC_WD.docx [retrieved on 2023-12-14] | 1-4, 6-10, 12-15 | |
| Y | * page 10, paragraph 8.3.6.1.3 – page 13, paragraph 8.3.6.2.3 * <br> * page 25 * | 5,11 | |
| A | DANILLO B GRAZIOSI (SONY) ET AL: "[V-CG] Sony's Dynamic Mesh Coding Call for Proposal Response", 138. MPEG MEETING; 20220425 – 20220429; ONLINE; (MOTION PICTURE EXPERT GROUP OR ISO/IEC JTC1/SC29/WG11), , no. m59284 24 April 2022 (2022-04-24), XP030301437, Retrieved from the Internet: URL:https://dms.mpeg.expert/doc_end_user/documents/138_OnLine/wg11/m59284-v2-m59284_Sony_Dynamic_Mesh_CfP_Response.zip SonyPresentation_04202020.pdf [retrieved on 2022-04-24] * page 17 * | 1-15 | TECHNICAL FIELDS SEARCHED (IPC) |

The present search report has been drawn up for all claims

| Place of search | Date of completion of the search | Examiner |
|---|---|---|
| Munich | 4 February 2025 | Moschetti, Fulvio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. MAMMOU ; J. KIM ; A. TOURAPIS ; D. PODBORSKI**. m59281 - [V-CG] Apple's Dynamic Mesh Coding CfP Response. *Apple Inc*, 2022
- **BOYCE, J. M. et al.** MPEG Immersive Video Coding Standard. *Proc. IEEE*, 2021, vol. 109 (9), 1521-1536
- **LAURI ILOLA et al.** An Overview of the MPEG Standard for Storage and Transport of Visual Volumetric Video-Based Coding. *Front. Signal Process.*, 29 April 2022, vol. 2